# EUROPEAN PATENT APPLICATION

(11) **EP 3 117 704 A1**
(43) Date of publication of application: **18.01.2017**
(21) Application number: 16179416.9
(22) Date of filing: 14.07.2016
(51) Int. Cl.: A01K 87/02, A01K 87/08

(54) **MODULAR FISHING POLE WITH INTERCHANGEABLE COMPONENTS**

(30) Priority: 14.07.2015 US 201562192453 P; 14.07.2015 US 201562192514 P; 23.06.2016 US 201615191453; 23.06.2016 US 201615191125
(71) Applicant: Huang, Ben, Huntington Beach, California 92648 (US)
(72) Inventor: Huang, Ben, Huntington Beach, California 92648 (US)
(74) Representative: Boult Wade Tennant

(57) **Abstract**

Multi-component fishing poles and methods of their construction and assembly are disclosed herein. The components of the fishing pole may include a handle component (9), a reel seat component (5), and a main rod component (3). The components may be replacably coupled to one another as desired by a user. The coupling may be performed by threaded regions attached to each of the components and designed to mate with one another. The components of the fishing pole may be aligned with alignment brakes (35A, 35B) used to limit the rotation of one component onto another as the components are replacably coupled. The reel seat component (5), as well as one or more of the other components, may include a performance enhancing gripping surface (1018).

## Description

### BACKGROUND OF THE INVENTION

### Field of the Invention

Certain embodiments disclosed herein relate to fishing poles and the construction thereof, as well as the incorporation of reel seats with a gripping surface.

### Description of the Related Art

There are many fishing poles used in the sport of fishing. The most common fishing poles include a rod shaft, a reel seat for securing a fishing reel, and a handle portion. The construction is typically from a single shaft comprising the rod shaft, which has a reel seat and handle secured to thereon. In addition, available reel seats are generally constructed of a sold material, such as aluminum or graphite, and lack a surface providing desirable performance characteristics.

### SUMMARY OF THE INVENTION

The disclosure herein provides a modular fishing pole with multiple interchangeable components. The interchangeable components provide greater customization of performance and aesthetic properties for anglers. The disclosure also provides a reel seat with an improved gripping surface for providing better comfort and control while maintaining transmittal of vibrations through the rod and methods of producing such reel seats.

For purposes of this summary, certain aspects, advantages, and novel features of the invention are described herein. It is to be understood that not necessarily all such advantages may be achieved in accordance with any particular embodiment of the invention. Thus, for example, those skilled in the art will recognize that the invention may be embodied or carried out in a manner that achieves one advantage or group of advantages as taught herein without necessarily achieving other advantages as may be taught or suggested herein.

In some embodiments, a multi-component fishing rod is provided. The multi-component fishing rod may comprise a first rod section having a first threaded region disposed longitudinally along a portion of the first rod section and a first grip positioned radially around the first rod section. The multi-component fishing rod may further comprise a second rod section having a second threaded region disposed longitudinally along a portion of the second rod section and a second grip positioned radially around the second rod section. The multi-component fishing rod may further comprise a first alignment brake having a first threaded surface configured to mate with the first threaded region of the first rod section and a second alignment brake having a second threaded surface configured to mate with the second threaded region of the second rod section. The multi-component fishing rod may further comprise a reel seat having a third threaded region, wherein the third threaded region is configured to mate with the first threaded region of the first rod section and the second threaded region of the second rod section.

In some embodiments, the multi-component fishing rod may further comprise a connector having a first side configured to be inserted partially into the first rod section and a second side configured to be inserted partially into the second rod section. In some embodiments, the connector further comprises a stop having a diameter larger than the first inner diameter of the first rod section and larger than the second inner diameter of the second rod section.

In some embodiments of the multi-component fishing rod the first grip, the second grip, and the reel seat are aligned when the first rod section is screwed into engagement with the first alignment brake and the second rod section is screwed into engagement with the second alignment brake.

In some embodiments, a method is provided of assembling a multi-component fishing rod. The method can include the step of attaching a first externally threaded bar to a first end of a first section of a fishing rod. The method can further include the step of attaching a second externally threaded bar to a second end of a second section of the fishing rod. The method can further include the step of screwing a first alignment brake having internal threading onto the first externally threaded bar. The method can further include the step of screwing a second alignment brake having internal threading onto the second externally threaded bar. The method can further include the step of attaching an internally threaded insert into a hollow cavity of a reel seat. The method can further include the step of inserting a connector into the first end of the first section of a fishing rod. The method can further include the step of screwing the first externally threaded bar into the internally threaded insert. The method can further include the step of screwing the second externally threaded bar into the internally threaded insert such that at least a portion of the connector is inserted into the second section of the fishing rod. The first section of the fishing rod, the second section of the fishing rod, and the reel seat are substantially in alignment after performing the method of assembling a multi-component fishing rod.

In some embodiments, a method is provided of assembling a multi-component fishing rod. The method can further include the step of screwing a first alignment brake having internal threading onto a first externally threaded bar attached to a first rod section. The method can further include the step of screwing a second alignment brake having internal threading onto a second externally threaded bar attached to a second rod section. The method can further include the step of screwing the first externally threaded bar into a reel seat having an internally threaded insert. The method can further include the step of aligning the reel seat and the first section of the fishing rod. The method can further include the step of screwing the second externally threaded bar into the internally threaded insert of the reel seat such that at least a portion of the connector is inserted into the second section of the fishing rod. The method can further include the step of aligning the reel seat and the second section of the fishing rod.

In some embodiments, the method of assembling a multi-component fishing rod further comprises inserting a connector into the first end of the first section of a fishing rod. In some embodiments, according to the method of assembling a multi-component fishing rod, aligning the reel seat and the first section of the fishing rod comprises tightening the reel seat onto the first externally threaded bar until fastened against the first alignment brake; determining that the reel seat is under rotated from alignment with the first section of the fishing rod; loosening the reel seat to allow movement of the alignment brake; tightening the alignment brake on the externally threaded bar; and tightening the reel seat onto the first externally threaded bar until fastened against the alignment brake such that it is no longer under rotated. In some embodiments, according to the method of assembling a multi-component fishing rod, aligning the reel seat and the first section of the fishing rod comprises tightening the reel seat onto the first externally threaded bar until fastened against the first alignment brake; determining that the reel seat is over rotated from alignment with the first section of the fishing rod; loosening the reel seat to allow movement of the alignment brake; loosening the alignment brake on the externally threaded bar; and tightening the reel seat onto the first externally threaded bar until fastened against the alignment brake such that it is no longer over rotated.

In some embodiments, a multi-component fishing rod is provided. The multi-component fishing rod may comprise a main rod component comprising a first threaded region disposed longitudinally along the main rod component, a handle component comprising a second threaded region disposed longitudinally along the handle component, and a reel seat having a third threaded region, wherein the third threaded region is configured to mate with the first threaded region of the main rod component and the second threaded region of the handle component. In some embodiment, the reel seat comprises a main body portion defining a first end and a second end. In some embodiments, the main body portion comprises a longitudinal hollow cavity extending from the first end of the main body portion to the second end of the main body portion configured to receive a handle portion of a fishing pole, a first insert portion configured to receive a first portion of a fishing reel arm, a second insert portion configured to receive a second portion of a fishing reel arm, and a recessed area extending around at least some of an exterior portion of the main body portion of the reel seat. In some embodiments a reel seat may further comprise a gripping member comprising a resilient material, wherein the gripping member is shaped to correspond to the recessed area of the main body portion, such that the gripping member will substantially fill the recessed area when applied to the main body portion, wherein the gripping member is adhered to the main body portion such that the gripping member substantially fills the recessed area.

In some embodiments, a main rod component for a multi-component fishing rod is provided comprising a main shaft having defining a first end with a first outer diameter, a main rod threaded region disposed longitudinally along the main shaft, a fore grip positioned radially around the main shaft.

In some embodiments, a handle component for a multi-component fishing rod is provided comprising a handle shaft defining a second end with a second outer diameter, a second threaded region disposed longitudinally along the handle shaft, and a rear grip positioned radially around the handle shaft.

In some embodiments, a reel seat component for a multi-component fishing rod is provided comprising, a main body portion defining a first end and a second end, a longitudinal hollow cavity extending from the first end of the main body portion to the second end of the main body portion, and a threaded region on an internal surface of the longitudinal hollow cavity.

In some embodiments, an alignment brake for use aligning components of a multi-component fishing rod is provided comprising, a solid material defining an inner diameter and an outer diameter; a cavity positioned between the inner diameter and the outer diameter, and a threaded surface configured to mate with an outer surface of a shaft component.

In some embodiments, a multi-component fishing pole kit is provided comprising a main rod component and a handle component.

In some embodiments, a multi-component fishing pole kit is provided comprising a main rod component, and a reel seat component.

In some embodiments, a multi-component fishing pole kit is provided comprising a main rod component, a reel seat component, and a handle component.

In some embodiments, a multi-component fishing pole kit is provided comprising a handle component, and a reel seat component.

In some embodiments, a multi-component fishing pole kit is provided comprising a main rod component, a handle component, and an alignment brake.

In some embodiments, a multi-component fishing pole kit is provided comprising a main rod component, the reel seat component, and an alignment brake.

In some embodiments, a multi-component fishing pole kit is provided comprising a main rod component, a reel seat component, a handle component, and an alignment brake.

In some embodiments, a multi-component fishing pole kit is provided comprising a reel seat component, a handle component, and an alignment brake.

In some embodiments, a multi-component fishing pole kit is provided comprising a main rod component, a handle component, and a guide providing instructions how to align components of the multi-component fishing pole.

In some embodiments, a multi-component fishing pole kit is provided comprising a main rod component, a reel seat component, and a guide providing instructions how to align components of the multi-component fishing pole.

In some embodiments, a multi-component fishing pole kit is provided comprising a main rod component, a reel seat component, a handle component, and a guide providing instructions how to align components of the multi-component fishing pole.

In some embodiments, a multi-component fishing pole kit is provided comprising a main rod component, a handle component, an alignment brake, and a guide providing instructions how to align components of the multi-component fishing pole.

In some embodiments, a multi-component fishing pole kit is provided comprising a main rod component, a reel seat component, an alignment brake, and a guide providing instructions how to align components of the multi-component fishing pole.

In some embodiments, a multi-component fishing pole kit is provided comprising a main rod component, a reel seat component, a handle component, an alignment brake, and a guide providing instructions how to align components of the multi-component fishing pole.

In some embodiments, a multi-component fishing pole kit is provided comprising a reel seat component, a handle component, an alignment brake, and a guide providing instructions how to align components of the multi-component fishing pole.

In some embodiments, a multi-component fishing pole kit is provided comprising a main rod component and an alignment brake.

In some embodiments, a multi-component fishing pole kit is provided comprising a handle component and an alignment brake according to claim 14.

In some embodiments, a multi-component fishing pole kit is provided comprising a reel seat component and an alignment brake according to claim 14.

In some embodiments, a multi-component fishing pole kit is provided comprising a main rod component, an alignment brake, and a guide providing instructions how to align components of the multi-component fishing pole.

In some embodiments, a multi-component fishing pole kit is provided comprising a handle component, an alignment brake, and a guide providing instructions how to align components of the multi-component fishing pole.

In some embodiments, a multi-component fishing pole kit is provided comprising a reel seat component, an alignment brake, and a guide providing instructions how to align components of the multi-component fishing pole.

In some embodiments, a multi-component fishing pole kit is provided comprising a main rod component and a guide providing instructions how to align components of the multi-component fishing pole.

In some embodiments, a multi-component fishing pole kit is provided comprising a handle component and a guide providing instructions how to align components of the multi-component fishing pole.

In some embodiments, a multi-component fishing pole kit is provided comprising a reel seat component and a guide providing instructions how to align components of the multi-component fishing pole.

In some embodiments, a multi-component fishing rod is provided. The multi-component fishing rod may comprise a first rod section and a second rod section. The first rod section may comprise a first engagement region and a first grip. The second rod section may comprise a second engagement region and a second grip. The multi-component fishing rod may further comprise a first alignment brake having a first engagement portion configured to mate with the first engagement region of the first rod section. The multi-component fishing rod may further comprise a second alignment brake having a second engagement portion configured to mate with the second engagement region of the second rod section. The multi-component fishing rod may further comprise a reel seat having a third engagement region, wherein the third engagement region is configured to mate with the first engagement region of the first rod section and the second engagement region of the second rod section.

In some embodiments, a method is provided of assembling a multi-component fishing rod. The method can include the step of providing a first section of the fishing rod including a first engagement region. The method can include the step of providing a second section of the fishing rod including a second engagement region and a second alignment brake. The method can include the step of providing a reel seat including an engagement region configured to engage the first and second engagement regions of the first and second sections of the fishing rod. The method can include the step of coupling the first engagement region to the reel seat. The method can include the step of coupling the second engagement region to the reel seat such that at least a portion of the connector is inserted into the second section of the fishing rod, wherein the first section of the fishing rod, the second section of the fishing rod, and the reel seat are substantially in alignment.

In some embodiments, the method can further include the step of providing a stabilizing member configured to be engaged with the first and second sections of the fishing pole. In some embodiments, the method can further include the step of inserting the connector into the first end of the first section of the fishing rod. In some embodiments, the method can further include the step of providing a first alignment brake configured to be attached to the first section of the fishing pole. In some embodiments, the method can further include the step of adjusting the first alignment brake to control the position of the first section of the fishing pole relative to the position of the reel seat.

In some embodiments, a reel seat to be used with a fishing pole is provided. The reel seat can include a main body portion defining a first end and a second end. The main body portion can comprise a longitudinal hollow cavity extending from the first end of the main body portion to the second end of the main body portion configured to receive a handle portion of a fishing pole; a securing portion including a first insert portion configured to receive a first portion of a fishing reel arm and a second insert portion configured to receive a second portion of a fishing reel arm; and a recessed area extending around at least some of an exterior portion of the main body portion of the reel seat, the recessed area including a depth and an outer periphery defining a recessed area shape; and a gripping member comprising a material with different characteristics than a material forming the main body portion adjacent the recessed area, wherein an outer periphery of the gripping member corresponds to the recessed area shape; wherein the gripping member is secured to the main body portion such that the gripping member is secured within the recessed area.

In some embodiments, a method of making a reel seat to be used with a fishing pole is provided. The method can comprise: providing a main body portion defining a first end and a second end, the main body portion comprising: a longitudinal hollow cavity extending from the first end of the main body portion to the second end of the main body portion configured to receive a handle portion of a fishing pole; a securing portion including a first insert portion configured to receive a first portion of a fishing reel arm and a second insert portion configured to receive a second portion of a fishing reel arm; and a recessed area extending around at least some of an exterior portion of the main body portion of the reel seat; providing a gripping member comprising a material with different characteristics than a material forming the main body portion adjacent the recessed area, wherein an outer periphery of the gripping member corresponds to the recessed area shape; and securing the gripping member onto the main body portion such that the gripping member is secured within the recessed area.

In some embodiments, a reel seat with a resilient insert is provided. The reel seat may comprise a main body portion defining a first end and a second end. The main body portion may include a longitudinal hollow cavity extending from the first end of the main body portion to the second end of the main body portion, wherein the longitudinal hollow cavity is configured to receive a handle portion of a fishing pole. The main body portion may also include a first insert portion configured to receive a first portion of a fishing reel arm and a second insert portion configured to receive a second portion of a fishing reel arm. The main body portion may also include a recessed area extending around at least some of an exterior portion of the main body portion of the reel seat. The reel seat may further comprise a gripping member comprising a resilient material, wherein the gripping member is shaped to correspond to the recessed area of the main body portion, such that the gripping member will substantially fill the recessed area when applied to the main body portion. The gripping member may be adhered to the main body portion such that the gripping member substantially fills the recessed area.

In some embodiments the reel seat is attached to the handle portion of a fishing pole. The fishing pole may comprise a fore grip, a rear grip, and a butt grip. The gripping member of the reel seat may correspond to the material or appearance of at least a portion of the fore grip, the rear grip, or the butt grip. In some embodiments, the enhanced reel seat is used as a reel seat component for a multi-component fishing rod as disclosed herein.

### BRIEF DESCRIPTION OF THE DRAWINGS

Various embodiments are depicted in the accompanying drawings for illustrative purposes, and should in no way be interpreted as limiting the scope of the embodiments. In addition, various features of different disclosed embodiments can be combined to form additional embodiments, which are part of this disclosure.
Fig. 1 is a perspective view of an embodiment of a fishing pole having modular components.
Fig. 2 is a view of embodiments of fishing poles having modular components.
Fig. 3 is an exploded view of an embodiment of a fishing pole having modular component.
Fig. 4 is a perspective view of an embodiment of components of a fishing pole having modular components in a stage of assembly.
Fig. 5 is a perspective view of an embodiment of components of a fishing pole having modular components in a stage of assembly.
Fig. 6 is a perspective view of components of a fishing pole having modular components in a stage of assembly.
Fig. 7 is a perspective view of an embodiment of components of a fishing pole having modular components in a stage of assembly.
Fig. 8 is a perspective view of components of a fishing pole having modular components in a stage of assembly.
Fig. 9 is a perspective view of an embodiment of components of a fishing pole having modular components in a stage of assembly.
Fig. 10 is a perspective view of an embodiment of components of a fishing pole having modular components in a stage of assembly.
Fig. 11 is a perspective view of an embodiment of components of a fishing pole having modular components in a stage of assembly.
Fig. 12 is a perspective view of an embodiment of components of a fishing pole having modular components in a stage of assembly.
Fig. 13 is a perspective view of an embodiment of components of a fishing pole having modular components in a stage of assembly.
Fig. 14 is a view of an embodiment of components of a fishing pole having modular components in a process of aligning the fishing pole assembly.
Fig. 15 is a view of an embodiment of components of a fishing pole having modular components in a process of aligning the fishing pole assembly.
Fig. 16 is a view of an embodiment of components of a fishing pole having modular components in a process of aligning the fishing pole assembly.
Fig. 17 is a view of an embodiment of components of a fishing pole having modular components in a process of aligning the fishing pole assembly.
Fig. 18 is a view of an embodiment of components of a fishing pole having modular components in a process of aligning the fishing pole assembly.
Fig. 19 is a view of an embodiment of components of a fishing pole having modular components in a process of aligning the fishing pole assembly.
Fig. 20 is a view of an embodiment of an alignment brake component of a fishing pole assembly.
Fig. 21 is a cross-sectional view of components in an embodiment of a multi-component handle assembly.
Fig. 22 is a cross-sectional view of components in an embodiment of a multi-component handle assembly.
Fig. 23 is a cross-sectional view of components in an embodiment of a multi-component handle assembly.
Fig. 24 is a flow chart illustrating an exemplary method of constructing a fishing pole from modular components.
Fig. 25 is a flow chart illustrating an exemplary method of assembling a fishing pole from modular components.
Figs. 26A and 26B are flow charts illustrating exemplary methods of aligning modular components of a fishing pole.
Fig. 27 is a perspective view of an embodiment of a fishing pole having a reel seat with a gripping surface.
Fig. 28 is a perspective view of an embodiment of a handle portion of a fishing pole having a reel seat with a gripping surface.
Fig. 29 is a side view of an embodiment of a handle portion of a fishing pole having a reel seat with a gripping surface.
Fig. 30 is a side view of an embodiment of a handle portion of a fishing pole having a reel seat with a gripping surface.
Fig. 31 is a side view of an embodiment of a handle portion of a fishing pole having a reel seat with a gripping surface.
Fig. 32 is a perspective view of an embodiment of a reel seat with a gripping surface.
Fig. 33 is a side view of an embodiment of a reel seat configured to receive a gripping member.
Fig. 34 is a side view of an embodiment of a reel seat with a gripping surface.
Fig. 35 is a back view of an embodiment of a reel seat with a gripping surface.
Fig. 36 is a front view of an embodiment of a reel seat with a gripping surface.
Fig. 37 is a bottom view of an embodiment of a reel seat with a gripping surface.
Fig. 38 is a top view of an embodiment of a reel seat with a gripping surface.
Fig. 39 is a view of an embodiment of a gripping member configured to be used with a reel seat.
Fig. 40 is a perspective view of an embodiment of a reel seat with a gripping surface.
Fig. 41 is a side view of an embodiment of a reel seat with a gripping surface.
Fig. 42 is a side view of an embodiment of a reel seat configured to receive a gripping member.
Fig. 43 is a front view of an embodiment of a reel seat with a gripping surface.
Fig. 44 is a back view of an embodiment of a reel seat with a gripping surface.
Fig. 45 is a bottom view of an embodiment of a reel seat with a gripping surface.
Fig. 46 is a top view of an embodiment of a reel seat with a gripping surface.
Fig. 47 is a view of an embodiment of a gripping member configured to be used with a reel seat.
Fig. 48 is a perspective view of an embodiment of a reel seat with a gripping surface.
Fig. 49 is a side view of an embodiment of a reel seat with a gripping surface.
Fig. 50 is a side view of an embodiment of a reel seat configured to receive a gripping member.
Fig. 51 is a front view of an embodiment of a reel seat with a gripping surface.
Fig. 52 is a back view of an embodiment of a reel seat with a gripping surface.
Fig. 53 is a top view of an embodiment of a reel seat with a gripping surface.
Fig. 54 is a bottom view of an embodiment of a reel seat with a gripping surface.
Fig. 55 is a view of an embodiment of a gripping member configured to be used with a reel seat.
Fig. 56 is a perspective view of an embodiment of a reel seat with a gripping member partially applied and a step in a method of applying a gripping member to a reel seat.

### DETAILED DESCRIPTION OF THE PREFERRED EMBODIMENT

Disclosed herein are components of fishing poles and methods of making and assembling such components. In some embodiments, the fishing poles and rods disclosed herein may be formed into distinct regions which can be connected to form a functional fishing pole. For example, the pole may comprise a handle component, a reel seat component, and a main rod component. Each of these components may be removably attached such as by screwing them together or otherwise temporarily attaching one component to another. This enables an angler to change out one component for another similar component for aesthetic or performance reasons such as changed fishing conditions, changed fishing targets, changed personal preferences, or similar reasons. For example, an angler may have two handles, one for dry conditions and one for wet conditions, which may be changed out depending on the current weather. Furthermore, modular construction of elements of a fishing pole may increase sensibility and detection of the rod. For example, the attachment of the reel seat to the shaft of the fishing rod through screw components may provide for additional feedback transmitted along the line and/or the rod to the angler.

In an embodiment, the handle, reel seat, and main rod components are connectable by screwing one component into another. The main rod component may have a shaft with external or internal threading configured to screw into complimentary threading of a reel seat. In some embodiments, the main rod shaft includes external threading configured to screw into internal threading of a reel seat. Similarly, a handle component may have external or internal threading configured to screw into complimentary threading of the reel seat. In some embodiments, the handle includes external threading configured to screw into internal threading of a reel seat. Thus, the three components may be connected into a single fishing pole for use by an angler. In some embodiments, there may be fewer or additional components used to assemble a fishing pole. For example there may be a handle component and a butt grip component enabling an angler to further modify the handle. For example, an angler may select a butt grip with a shaft component of a desired length to meet the angler's personal preferences.

In some embodiments the components of the fishing pole may be aligned either axially, rotationally, and/or both axially and rotationally using brakes on the threading. For example, a brake may screw onto the threading and can be positioned to stop the reel seat from screwing further onto the shaft of the fishing rods such that the components are aligned. The brakes may be adjusted forward or backward along the threading to stop the reel seat in alignment with the other components. In some embodiments, the components of a fishing pole may be aligned by having a threaded portion of the reel seat rotate about the external threaded portion of a shaft while an alignment groove aligns the reel seat and the shaft of a handle or main rod section of a fishing pole. In some embodiments one or more of the modular components of the fishing pole may be reversibly coupled together by other means. For example, the pieces may be locked into one another in alignment using spring locks, pins, clamps, twist locks, lever locks, socket locks, bayonet couplings, or other securing means.

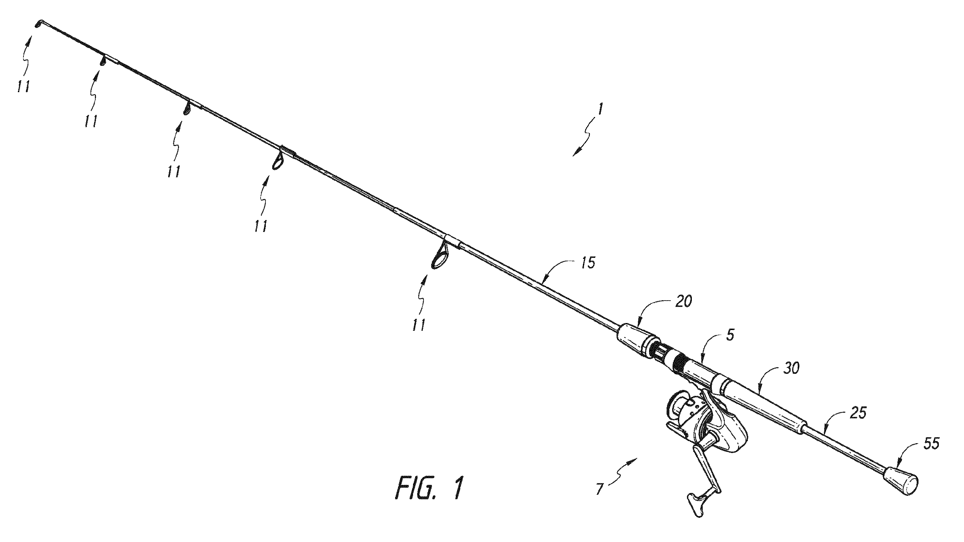

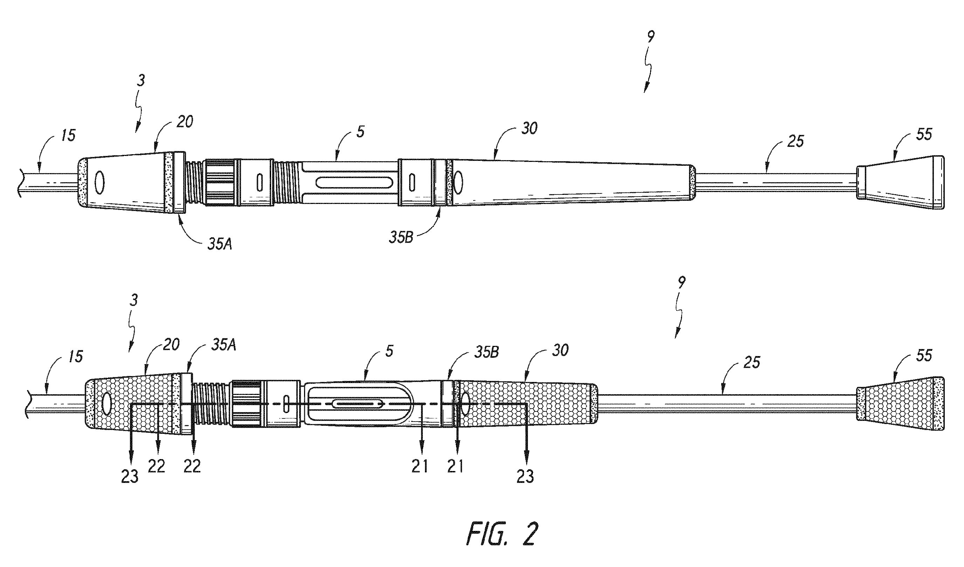

Fig. 1 depicts a fishing pole 1 including a main rod component 3, a reel seat 5 securing a reel 7, and a handle component 9. The main rod component 3 comprises multiple guides 11 attached to a main shaft 15. The main rod component 3 may also include a fore grip 20. In some embodiments, the main shaft 15 may be made of multiple pieces which may be joined at a ferrule enabling the pole to be broken down. The handle component 9 may include a handle shaft 25 and one or more grips such as a rear grip 30 and a butt grip 55. Fig. 2 depicts close up views of embodiments of handle components 9 and reel seat 5 as disclosed herein. Alignment brakes 35A and 35B are used to align the handle component 9, the reel seat 5, and the main rod component 3.

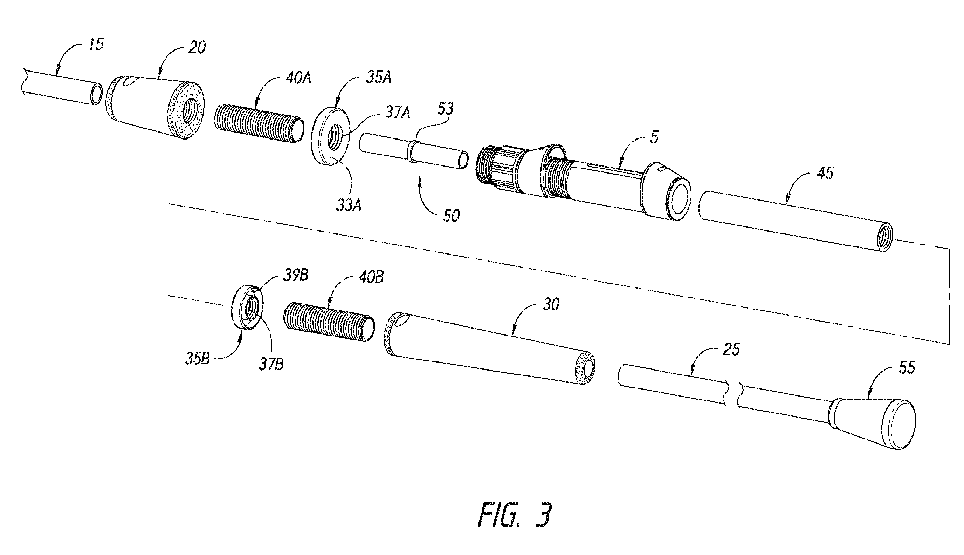

Fig. 3 depicts an exploded view of an embodiment of a fishing pole made of a main rod component 3, a reel seat 5, and a handle component 9. The main rod component 3 includes a main shaft 15, a fore grip 20 and a threaded region 40A. In some embodiments, the main rod component 3 may not include a fore grip 20. The main shaft 15 may be made of a variety of materials including but not limited to graphite, carbon, fiberglass, plastic, wood, or composite materials.

In some embodiments, as shown in Fig. 3, the threaded region 40A may be a separate component from the main shaft 15 which is fitted to the shaft and adhered in place. For example, the threaded region 40A may be a threaded rod constructed of a lightweight metal such as aluminum that is adhered to the main shaft 15 with a silicone rubber adhesive. In some embodiments the threaded region is fixed, adhered, or otherwise secured to the main shaft 15 by other means. In some embodiments, the threaded region 40A is formed as part of the main shaft 15 during original construction of the main shaft. In some embodiments the threaded region 40A extends under the fore grip 20. In some embodiments, the threaded region 40A stops at the fore grip 20, or there may be a gap between the fore grip 20 and the threaded region 40A. In some embodiments the threaded region 40A may be another form of locking mechanism or engagement region.

In some embodiments, the components of the fishing rod include one or more of a fore grip 20, a rear grip 30, or a butt grip 55. The grips 20, 30, and 35 may be made of ethylene-vinyl-acetate (EVA), cork, or another material suitable for use on a fishing rod. For example, the grips 20, 30, and 35 may be made as described in U.S. Patent Application No. 12/753,669 filed April 2, 2010, now U.S. patent no. 8,518,505, which is hereby incorporated herein by reference in its entirety. In some embodiments, the reel seat 5 may also include a gripping surface made of the same or similar material as one or more of a fore grip 20, a rear grip 30, or a butt grip 55, as described herein.

The components of the fishing rod may be changed by an angler to meet personal preferences. An angler may select any combination of reel seats, main rods, and handles. For example, the angler may have a particular reel seat and handle that he prefers to use when angling based on aesthetic or performance considerations. However, the angler may have various poles of different weights, lengths, or actions. Thus, the angler could change out the main rod component while maintaining the preferred handle and reel seat components. As another example, an angler may have a reel seat and main rod combination that is set up for a specific fishing reel. However, as the angler is fishing conditions may change which affect the performance of one or more grips or gripping members. For example, a particular grip may have good comfort and vibration transmission for normal fishing conditions. However, if it begins to rain, the grip may not provide the slip resistance preferred by the angler. Thus, the angler can change out the handle component to a grip with greater tackiness under wet conditions to prevent slipping. In certain circumstances, the angler may also prefer to change the reel seat to another reel seat with better performance grip for wet conditions. Under various circumstances an angler may change any component of the fishing rod to use under changing preferences or circumstances.

In some embodiments, the fishing rod includes an alignment brake 35A used to align the reel seat with the main rod component 3. For example, the reel seat should be in alignment with the line guides 11 of the fishing pole such that line coming on or off of a fishing reel is directed toward the line guides without interference with the main shaft 15. For aesthetic purposes as well, the reel seat should align with any patterns on the fore grip 20. The alignment brake 35A may have a threaded region 37A on the interior of the brake which is configured to mate with the threaded region 40A of the main rod component 3. In some embodiments the threaded region 37A may be another form of locking mechanism or engagement portion configured to engage an engagement region of the main rod component 3. Thus, by rotating in one direction, the alignment brake 35A will move forward toward the tip of the fishing pole 1 and by rotating in the other direction, the alignment brake 35A will move back away from the tip of the fishing pole 1. Use of the alignment brake 35A to align the reel seat 5 with the main rod component 3 is discussed further below.

The reel seat 5 may include a main body portion and a threaded insert 45. The reel seat may be made of graphite, aluminum, plastic, or another suitable material that provides sufficiently light construction while providing the required strength for holding a reel during angling activities. The reel seat may be configured to accept a spinning reel, a baitcast reel, a spincast reel, a fly reel, a trolling reel, or any other type of fishing reel commonly used with a fishing pole. In some embodiments, the threaded insert 45 may be constructed of aluminum, titanium, another metal, or an alloy which provides sufficient structure to secure to threaded regions 40A and/or 40B. In some embodiments, the reel seat 5 may be particularly constructed to accept a threaded insert 45 configured to mate with threaded regions on other fishing pole components. In some embodiments the threaded insert 45 may be another form of locking mechanism or engagement region. In some embodiments, instead of a single threaded insert 45, there may be multiple threaded inserts. For example, there may be a forward threaded insert for mating with the threaded region on the main shaft 15 and a rear threaded insert for mating with the threaded region on the handle shaft 25. This may reduce the weight and costs of material for constructing a reel seat 5 with a threaded insert 45. In addition, the use of multiple inserts may enable the reel seat to mate to a handle shaft 25 and a main shaft 15 having different outer diameters. In some embodiments, the reel seat 5 may have threads built into an interior hollow cavity instead of having a separate insert. In some embodiments, a reel seat may be modified from its original construction to accept a threaded insert 45. For example, a reel seat 5 may have a larger longitudinal hollow cavity bored there through such that an interior diameter of the reel seat is large enough and parallel enough to accept a threaded insert. In some embodiments the threaded insert is adhered to the reel seat using silicone rubber or another adhesive. In some embodiments, the threaded insert is fixed, adhered, or otherwise secured into the reel seat by other means.

The handle component 9 may include a threaded region 40B, a rear grip 30, a handle shaft 25, and a butt grip 55. In some embodiments the handle component 9 may include fewer or additional grips. For example, the handle component 9 may not include a butt grip 55. The handle shaft 25 may be made of a variety of materials including but not limited to graphite, carbon, fiberglass, plastic, wood, or composite materials. In some embodiments the handle shaft 25 is constructed of the same material as the main shaft 15, while in other embodiments, the shafts may be made of different materials. For example, the handle shaft 25 may be constructed of a material with reduced flexibility compared to the main shaft 15 to enable better control while handling, but better flexibility at the end of the main shaft 15 for controlling fish or bait while angling. In some embodiments, the handle shaft 25 and the main shaft 15 were constructed as a single rob blank, which was cut into two pieces, one becoming the handle shaft 25 and the other becoming the main shaft 15.

In some embodiments, as shown in Fig. 3, the threaded region 40B may be a separate component from the handle shaft 25 which is fitted to the shaft and adhered in place. For example, the threaded region 40B may be a threaded rod constructed of a lightweight metal such as aluminum that is adhered to the handle shaft 25 with a silicone rubber adhesive. In some embodiments the threaded region is fixed, adhered, or otherwise secured to the handle shaft 25 by other means. In some embodiments, the threaded region 40B is formed as part of the handle shaft 25 during original construction of the handle shaft. In some embodiments the threaded region 40B extends under the rear grip 30. In some embodiments, the threaded region 40B stops at the rear grip 30, or there may be a gap between the rear grip 30 and the threaded region 40B. In some embodiments the threaded region 40B may be another form of locking mechanism or engagement region.

In some embodiments, the fishing rod includes an alignment brake 35B used to align the reel seat 5 with the handle component 9. For example, the reel seat 5 should be in alignment with the rear grip 30 and the butt grip 55 of the fishing pole such that aesthetic patterns and ergonomically properties of the handle component 9 are in line with the reel seat 5. In some embodiments, the handle component 9 may be generally symmetrical about the center axis, in which case the pole may not include an alignment brake 35B as alignment is not important to the functioning of the handle component 9. The alignment brake 35B may have a threaded region 37B on the interior of the brake which is configured to mate with the threaded region 40B of the handle component 9. In some embodiments the threaded region 37B may be another form of locking mechanism or engagement portion configured to engage an engagement region of the main rod component 3. Thus, by rotating in one direction, the alignment brake 35B will move back toward the butt of the fishing pole 1 and by rotating in the other direction, the alignment brake 35B will move forward away from the butt of the fishing pole 1. Use of the alignment brake 35B to align the reel seat 5 with the handle component 9 is discussed further below.

In some embodiments, the alignment brakes 35A and 35B are the same or similar and may be interchangeable in use. In some embodiments, the alignment brakes 35A and 35B have an outer diameter similar in size to the outer diameter of fore grip 20 or rear grip 30 such that the connection between the reel seat 5 to the alignment brake 35A or 35B to the grip 20 or 20 is substantially smooth. As shown in Fig. 3, in some embodiments, the alignment brakes may have a flat side and a concave side. For example, the alignment brake 35A shows a flat side 33A and the alignment brake 35B shows a concave side 39B. The opposing side of each of the alignment brakes 35A may be concave of alignment brake and 35B may be flat. The flat side, for example side 33A, may be configured to engage with reel seat 5 as the reel seat 5 is screwed onto the threaded region 40A. The convex side, for example side 39B, may be configured such that a grip may fit at least partially into the hollow region. For example, the rear grip 30 may have a gap between the threaded region 40B or the handle shaft 25 of the handle component 9 to receive the inner edge of the convex side 39B of the alignment brake 35B. The outer edge of the convex side 39B may be configured to have an outer diameter substantially similar to the outer diameter of the rear grip 30 such that a portion of the rear grip fits into the hollow area generated by the alignment brake 35B.

In some embodiments, the fishing pole 1 includes a connector 50. The connector 50 may be configured to have an outer diameter substantially similar in size to the inner diameter of the main shaft 15 and/or the handle shaft 25. The connector may provide additional strength to the connection point between the main shaft 15 and the handle shaft 25. In some embodiments, the connector is made of silicon rubber. In some embodiments, the connector may be made of aluminum, graphite, plastic, or an alloy to meet strength and weight requirements. In some embodiments, the main shaft 15 and the handle shaft 25 may have different diameters. In such embodiments, the connector may have a different outer diameter on one side than on the other to accommodate the different shaft sizes. The connector 50 may include a stop 53 which has a larger outer diameter than the inner diameter of the main shaft 15 or the handle shaft 25. The stop 53 may prevent the connector from sliding completely into either of the main shaft 15 or the handle shaft 25. In some embodiments, the components of the fishing pole 1 may be assembled without use of a connector 50.

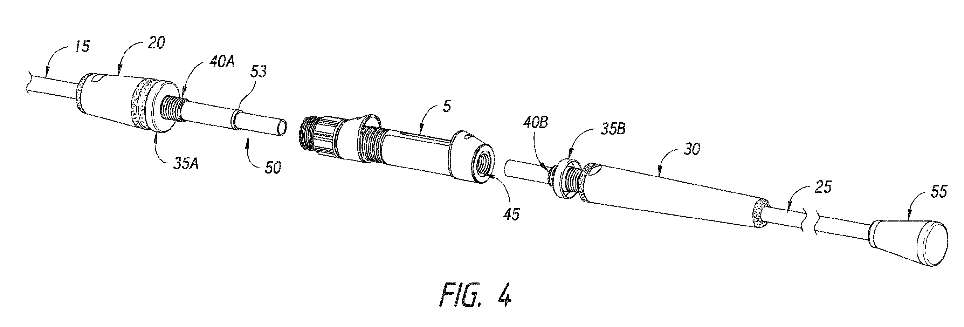

Figs. 4-8 show embodiments of various stages in the process of assembling a fishing pole from the various components disclosed herein. Fig. 4 depicts an embodiment of a stage of assembly wherein the alignment brakes 35A and 35B are partially threaded onto the threaded regions 40A and 40B. In addition, the connector 50 is inserted into the main shaft 15. In some embodiments, the connector 50 may not be used or may be inserted into the handle shaft 25 instead of main shaft 15.

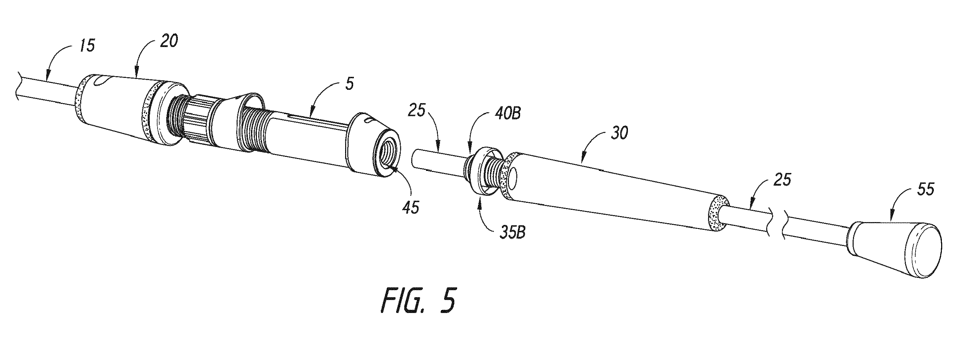

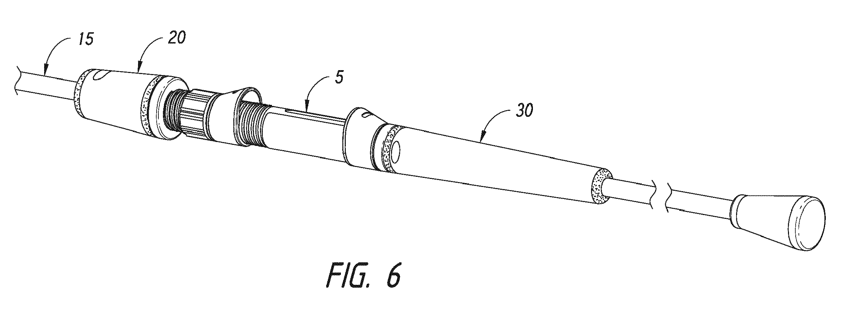

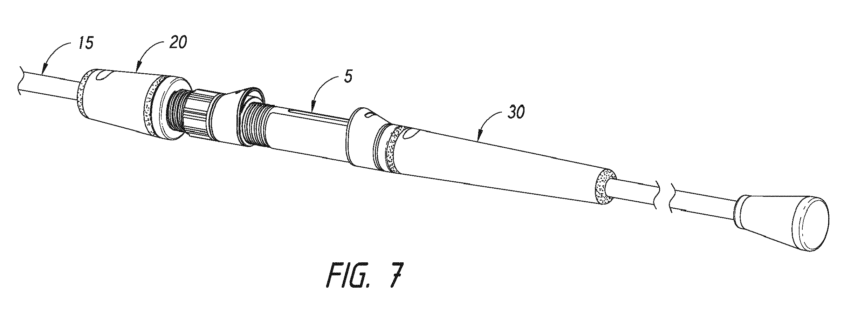

Fig. 5 depicts an embodiment of a stage of assembly wherein the alignment brake 35A is threaded up to the fore grip 20 and the reel seat 5 is screwed onto the threaded region 40A until it engages the alignment brake 35A. Fig. 6 depicts an embodiment of a stage of assembly wherein the alignment brake 35B is threaded close to the rear grip 30 and the reel seat 5 is screwed onto the threaded region 40A until it engages the alignment brake 35B. As shown in Fig. 6 the rear grip 30 and the reel seat 5 are not aligned along the shaft of the pole. Fig. 7 depicts an embodiment of a stage of assembly wherein the alignment brake 35B is threaded close to the rear grip 30 and the reel seat 5 is screwed onto the threaded region 40A. The reel seat 5 and the rear grip 30 are in alignment along the shaft of the fishing pole 1.

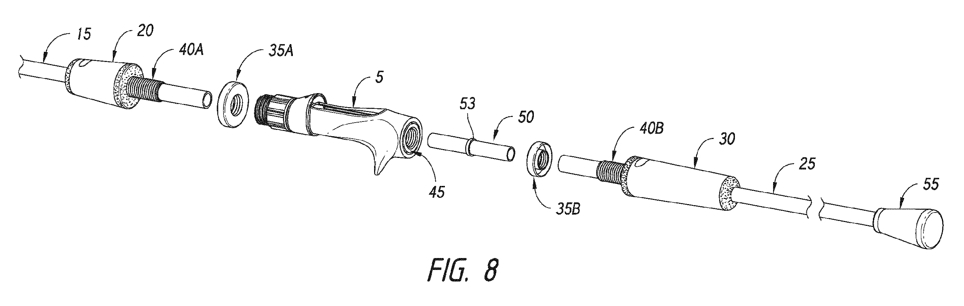

Fig. 8 depicts an exploded view of an embodiment of a fishing pole made of a main rod component 3, a reel seat 5, and a handle component 9. In comparison to the embodiments illustrated in Fig. 3, the embodiments in Fig. 8 include a reel seat with a trigger grip. For example, the reel seat in Fig. 8 may be configured to receive a baitcasting reel as opposed to a sinning reel. The remaining components depicted in Fig. 8 may be the same or similar to those described above in reference to Fig. 3. For example, the embodiment illustrated in Fig. 1 includes a fore grip 20, a main shaft 15 having a threaded region 40A, an alignment brake 35A a reel seat 5 having inner threading 45, a handle shaft 25 having threaded region 40B, and a butt grip 55.

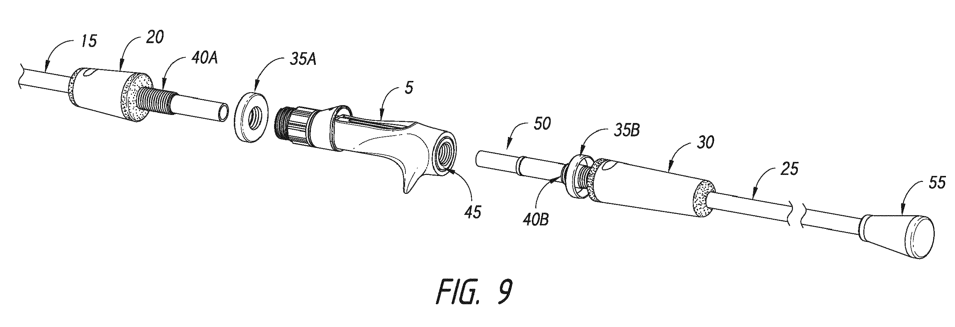

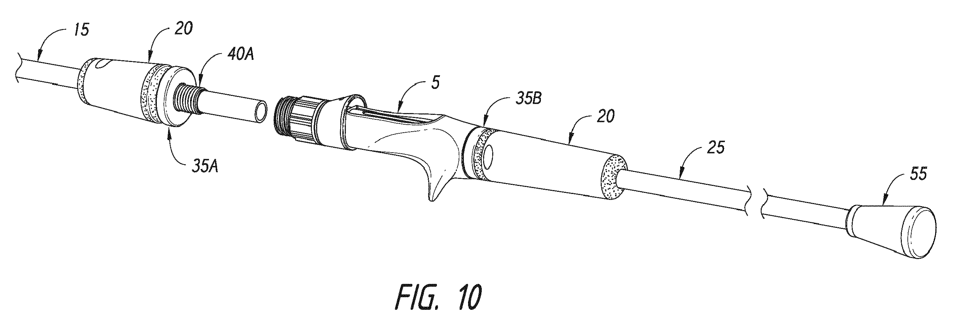

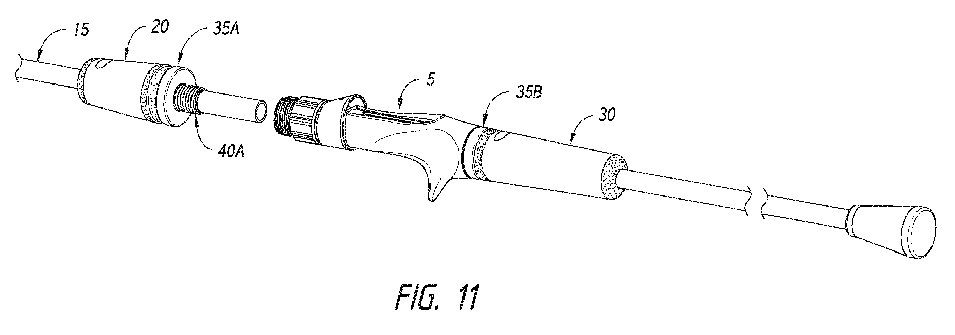

Figs. 9-13 show embodiments of various stages in the process of assembling a fishing pole from the various components disclosed herein. Fig. 9 depicts an embodiment of a stage of assembly wherein the alignment brakes 35B is partially threaded onto the threaded regions 40B. In addition, the connector 50 is inserted into the handle shaft 15. Fig. 10 depicts an embodiment of a stage of assembly wherein the alignment brake 35B is threaded up to the rear grip 20 and the reel seat 5 is screwed onto the threaded region 40B until it engages the alignment brake 35B. However, the rear grip 30 is not aligned with the reel seat 5. In addition, the alignment brake 35A is threaded partially onto the threaded region 40A of the main rod component 3. Fig. 11 depicts an embodiment of a stage of assembly wherein the reel seat 5 is aligned with the rear grip 30.

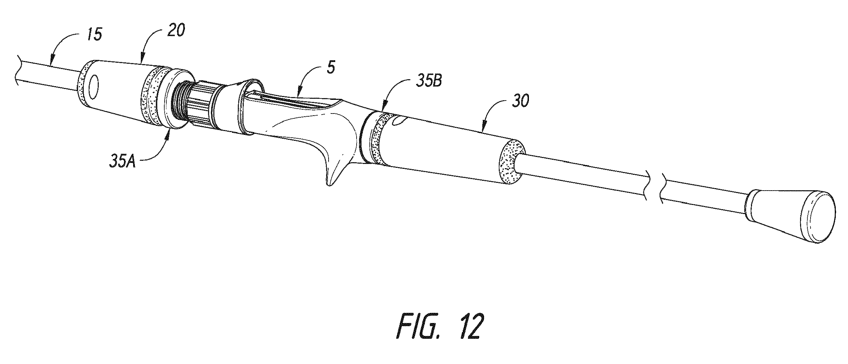

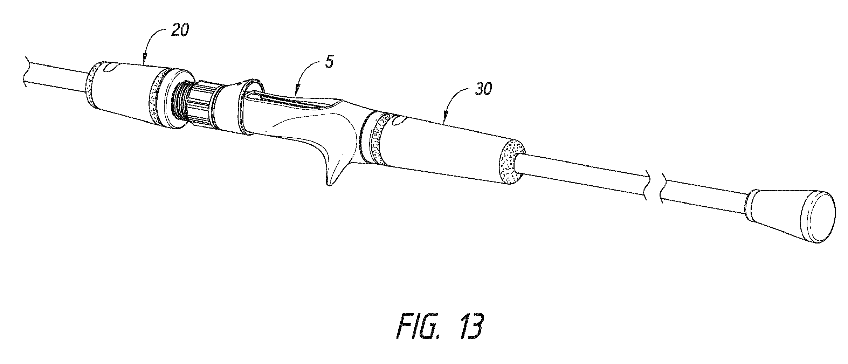

Fig. 12 depicts an embodiment of a stage of assembly wherein the alignment brake 35A is threaded close to the fore grip 20 and the reel seat 5 is screwed onto the threaded region 40A until it engages the alignment brake 35A. As shown in Fig. 12 the fore grip 20 and the reel seat 5 are not aligned along the shaft of the pole. Fig. 13 depicts an embodiment of a stage of assembly wherein the alignment brake 35A is threaded close to the fore grip 20 and the reel seat 5 is screwed onto the threaded region 40A. The reel seat 5 and the rear grip 30 are in alignment along the shaft of the fishing pole 1.

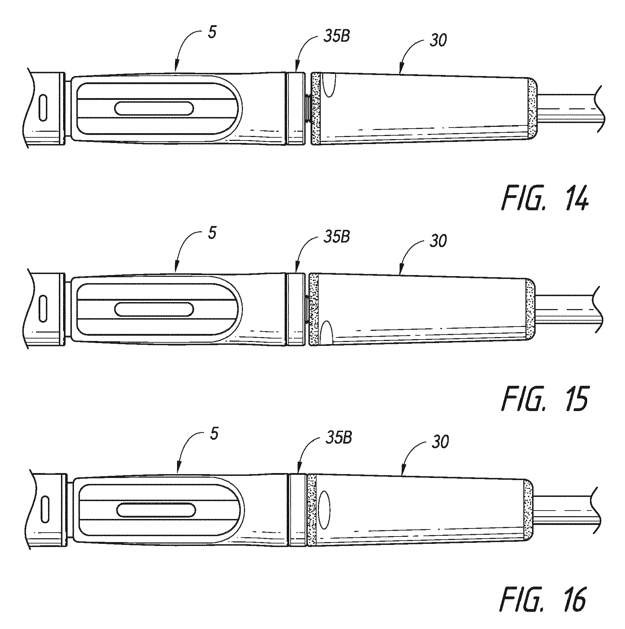

Figs. 14-16 depict embodiments of stages of aligning the reel seat 5 with the rear grip 30. Beginning in Fig. 14, the alignment brake 35B is threaded onto the threaded region 40B and the reel seat 5 is screwed onto the threaded region 40B such that it has engaged the alignment brake 35B and stops the reel seat 5 from aligning with the rear grip 30. In Fig. 14, the reel seat is over rotated in comparison to alignment with the rear grip 30. That is to say, the most direct way to align the reel seat 5 with the rear grip 30 would be to screw the reel seat 5 away from the rear grip 30. In such a situation, the reel seat 5 may be loosened to disengage from the alignment brake 35B. Then, the alignment brake 35B may be screwed away from the rear grip 30 such that when the reel seat 5 is screwed back into engagement with the alignment brake 35B it is stopped short of where it was previously. Stopping the reel seat 5 at fewer rotations aligns the reel seat 5 in a position where it is rotated less about the axis and may be in closer alignment with the rear grip 30.

In Fig. 15, the reel seat is under rotated in comparison to alignment with the rear grip 30. That is to say, the most direct way to align the reel seat 5 with the rear grip 30 would be to screw the reel seat 5 toward the rear grip 30 such that the reel seat 5 rotates into alignment with the rear grip 30. In such a situation, the reel seat 5 may be loosened to disengage from the alignment brake 35B. Then, the alignment brake 35B may be screwed further toward the rear grip 30 such that when the reel seat 5 is screwed back into engagement with the alignment brake 35B it rotates further about the threaded region 40B and into alignment with the rear grip 30. Fig. 16 illustrates a completed alignment of the reel seat 5 with the rear grip 30. It is noted that in the configuration depicted in Fig. 15 there is a gap between the alignment brake 35B and the rear grip 30. After the reel seat 5 is brought into alignment with the rear grip 30, as shown in Fig. 16, the gap between the alignment brake 35B and the rear grip 30.

In certain circumstances and situations the process of aligning the reel seat with the rear grip may take several iterations. For example, the alignment brake 35B may need to be loosened multiple times before an over rotated reels seat 5 is brought into alignment with the rear grip 30. As another example, the alignment brake 35B may need to be tightened multiple times before an under rotated reel seat 5 is brought into alignment with the rear grip 30. In certain situations, a reel seat 5 may be under or over rotated, and then after an iteration of tightening or loosening the alignment brake 35B, respectively, the reel seat 5 may be the opposite. Then, the alignment brake 35B would need to have an iteration of moving in the other direction to correct the alignment. Figs. 14-16 illustrate processes of aligning a reel seat 5 with the rear grip 30, but similar processes and terminology may be used in reference to alignment of the reel seat 5 with the fore grip 20.

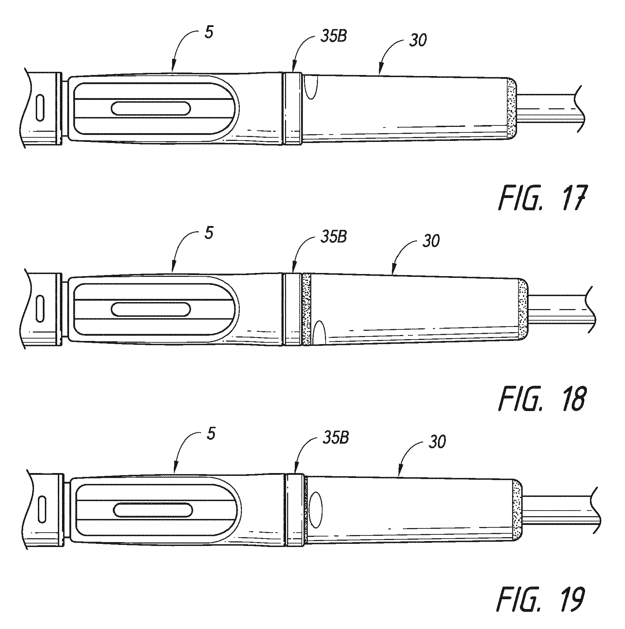

Figs. 17-19 depict embodiments of stages of aligning the reel seat 5 with the rear grip 30. Beginning in Fig. 17, the alignment brake 35B is threaded onto the threaded region 40B and the reel seat 5 is screwed onto the threaded region 40B such that it has engaged the alignment brake 35B and stops the reel seat 5 from aligning with the rear grip 30. In some embodiments, visual indicia on the grip can be used to align the grip with other components on the pole, for example as shown. In Fig. 17, the reel seat is over rotated in comparison to alignment with the rear grip 30. That is to say, the most direct way to align the reel seat 5 with the rear grip 30 would be to screw the reel seat 5 away from the rear grip 30. In such a situation, the reel seat 5 may be loosened to disengage from the alignment brake 35B. Then, the alignment brake 35B may be screwed away from the rear grip 30 such that when the reel seat 5 is screwed back into engagement with the alignment brake 35B it is stopped short of where it was previously. Stopping the reel seat 5 at fewer rotations aligns the reel seat 5 in a position where it is rotated less about the axis and may be in closer alignment with the rear grip 30. As shown in Fig. 17, the alignment grip is in position such that it partially covers the rear grip 30. In some embodiments, the rear grip 30 is fitted partially inside the cavity 39B of the alignment brake 35B.

In Fig. 18, the reel seat is under rotated in comparison to alignment with the rear grip 30. That is to say, the most direct way to align the reel seat 5 with the rear grip 30 would be to screw the reel seat 5 toward the rear grip 30 such that the reel seat 5 rotates into alignment with the rear grip 30. In such a situation, the reel seat 5 may be loosened to disengage from the alignment brake 35B. Then, the alignment brake 35B may be screwed further toward the rear grip 30 such that when the reel seat 5 is screwed back into engagement with the alignment brake 35B it rotates further about the threaded region 40B and into alignment with the rear grip 30. In the embodiment depicted in Fig. 18, the alignment brake is sufficiently backed off of the rear grip such that more of the rear grip is exposed. In some embodiments with a multi-layer grip on top of an underlying handle structure, such as EVA or cork, a portion of the underlying handle structure may also be exposed.

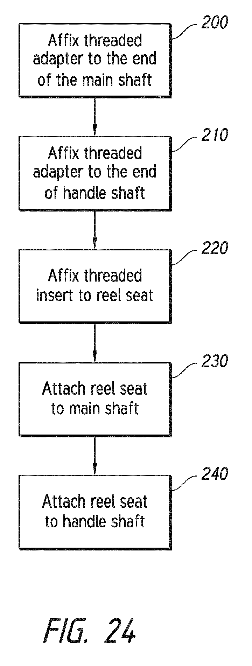

Fig. 19 illustrates a completed alignment of the reel seat 5 with the rear grip 30. It is noted that in the configuration depicted in Fig. 19 alignment brake 35B is in an intermediate position compared to the embodiments shown in Figs. 17 and 18. For example, a process of aligning the reel seat may have begun in Fig. 17 with an over rotated reel seat, which was then loosened to the point it was under rotated as shown in Fig. 18, and then aligned properly in Fig. 19. Figs. 17-19 illustrate processes of aligning a reel seat 5 with the rear grip 30, but similar processes and terminology may be used in reference to alignment of the reel seat 5 with the fore grip 20. In some embodiments, the interchangeable components of a fishing pole may be provided with a guide describing how to remove, replace, or install the components and how to align the components. For example, a guide may be provided with instructions how to align various components, such as according to the processes embodied in the flow charts illustrated in Figs. 24-26.

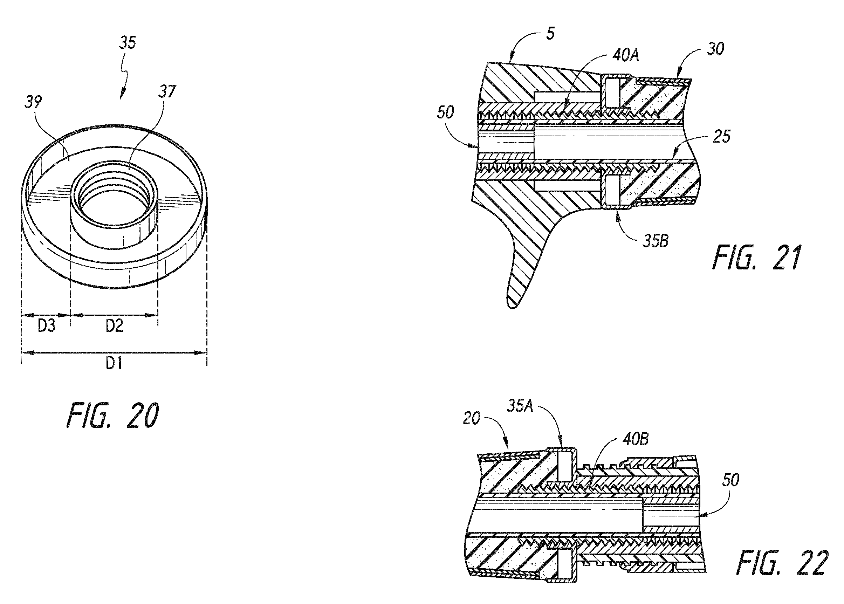

Fig. 20 depicts a close-up view of an alignment brake 35 as used in an embodiment. The alignment brake 35 may be used as the brake for aligning a fore grip or a rear grip, or for aligning other components. As shown in Fig. 20, the alignment brake includes a threaded inner portion 37 and a cavity 39. In some embodiments, the alignment brake may not include a cavity 39, but may instead have just a plate for contacting the reel seat 5 when the components are assembled.

In some embodiments, the circumference of the alignment brake may be approximately the same as the circumference of the grip portion that the alignment brake will contact. For example, the distance D1 shown in Fig. 20 may be the same or similar to the outer diameter of the fore grip 20 or the rear grip 30. The inner diameter D2 of the alignment brake 35 may be configured to accept the outer threading region of the shaft of a fishing pole. For example, the inner diameter D2 may be substantially similar to the outer diameter of the main shaft 15 or the handle shaft 25. The distance D3 may then be approximately the thickness of a grip attached to a shaft of a fishing pole such that the grip may fit partially inside the alignment brake. In some embodiments, the depth of the cavity 39 may be such that the reel seat 5 may be aligned in any radial direction while at least a portion of the cavity 39 of the alignment brake 35 accepts a portion of a grip. For example, a distance defined by depth of the cavity 39 may be longer than the length of shaft required for the reel seat to make one rotation about the shaft of a pole. Thus, there will be at least one point at which the alignment brake 35 is positioned with a portion of grip inside the cavity 39 and the reel seat is in alignment with the grip.

Fig. 21 is a cross-sectional view of components in an embodiment of a multi-component handle assembly showing the connection of a reel seat 5 to a rear grip 30. As shown in Fig. 21, the reel seat 5 is engaged with the alignment brake 35B such that it is secured in position. The rear grip 30 is partially inserted into the alignment brake 35B. The cavity 39B of the alignment brake 35B may have additional capacity to accept more of the rear grip 30 if needed to align the reel seat 5. In some embodiments, the alignment brake 35A may have a cavity 39B with small enough depth that it does not extend over a multi-layer gripping member 60 that is part of the rear grip 30. In some embodiments, the alignment brake 35A may extend over part of a multi-layer grip 60 that makes up part of the rear grip 30.

In some embodiments, as shown in Fig. 21, the threaded insert 45 attached to the reel seat 5 extends to the end of the reel seat. Thus, the threaded insert 45 is also engaged with the alignment brake 35B. In some embodiments, the threaded insert may not extend to the end of the reel seat 5 and then would not engage with the alignment brake 35B. In preferred embodiments, the threaded insert 45 may be prevented from extending past the end of the reel seat 5 to avoid a gap between the reel seat 5 and the alignment brake 35B. Such a gap may prevent the completed assembly from having a smooth transition between parts.

In some embodiments, the assembly includes a connector 50 to add additional support to the connection between components of the assembly. The connector 50 may extend from the main shaft 15 to the handle shaft 25. The connector 50 as shown in Fig. 21 may be positioned inside the reel seat 5. In some embodiments, the connector 50 has an outer diameter substantially matched to the inner diameter of the handle shaft 25. The connector in Fig. 21 is positioned inside the reel seat 5. For example, in some embodiments the connector 50 is substantially shorter than the length of the reel seat 5 and is maintained sufficiently close to the center of the reel seat 5 by the handle shaft 25 and the main shaft 15 such that the connector 50 does not extend past the reel seat 5. In some embodiments, the connector 50 may be longer and may extend past the end of the reel seat into the portion of the handle shaft 25 surrounded by the alignment brake 35B or the rear grip 30. For example, in some embodiments the connector 50 may be longer than the length of the reel seat 5 such that it extends further than reel seat 5.

Fig. 22 is a cross-sectional view of components in an embodiment of a multi-component handle assembly showing the connection of a reel seat 5 to a fore grip 20. As shown in Fig. 22, the reel seat 5 is engaged with the alignment brake 35A such that it is secured in position. The fore grip 20 is partially inserted into the alignment brake 35A. The cavity 39A of the alignment brake 35A may have additional capacity to accept more of the fore grip 20 if needed to align the reel seat 5. Furthermore, if the reel seat 5 needs to be backed off into alignment, the alignment brake 35A extends partially over the fore grip 20 such that it can be positioned away from the fore grip 20 without creating a gap between the alignment brake 35A and the fore grip 20 to bring the reel seat 5 into alignment. In some embodiments, the alignment brake 35A may have a cavity 39A with small enough depth that it does not extend over a multi-layer gripping member 60 that is part of the fore grip 20. In some embodiments, the alignment brake 35A may extend over part of a multi-layer grip 60 that makes up part of the fore grip 20. In some embodiments, the fore grip 20 does not include a multi-layer gripping member 60, but instead is made through another method, such as directly from EVA, cork, plastic, another material, or another process of applying a grip to a material.

In some embodiments, as shown in Fig. 22, the threaded insert 45 attached to the reel seat 5 extends to the end of the reel seat. Thus, the threaded insert 45 is also engaged with the alignment brake 35A. In some embodiments, the threaded insert may not extend to the end of the reel seat 5 and then would not engage with the alignment brake 35A. In preferred embodiments, the threaded insert 45 may be prevented from extending past the end of the reel seat 5 to avoid a gap between the reel seat 5 and the alignment brake 35A. Such a gap may prevent the completed assembly from having a smooth transition between parts.

In some embodiments, the assembly includes a connector 50 to add additional support to the connection between components of the assembly. The connector 50 may extend from the main shaft 15 to the handle shaft 25. The connector 50 as shown in Fig. 22 may be positioned inside the reel seat 5. In some embodiments, the connector 50 has an outer diameter substantially matched to the inner diameter of the main shaft 15. The connector in Fig. 22 is positioned inside the reel seat 5. For example, in some embodiments the connector 50 is substantially shorter than the length of the reel seat 5 and is maintained sufficiently close to the center of the reel seat 5 by the handle shaft 25 and the main shaft 15 such that the connector 50 does not extend past the end of the reel seat 5. In some embodiments, the connector 50 may be longer and may extend past the end of the reel seat into the portion of the main shaft 15 surrounded by the alignment brake 35B or the rear grip 30. For example, in some embodiments the connector 50 may be longer than the length of the reel seat 5 such that it extends further than reel seat 5.

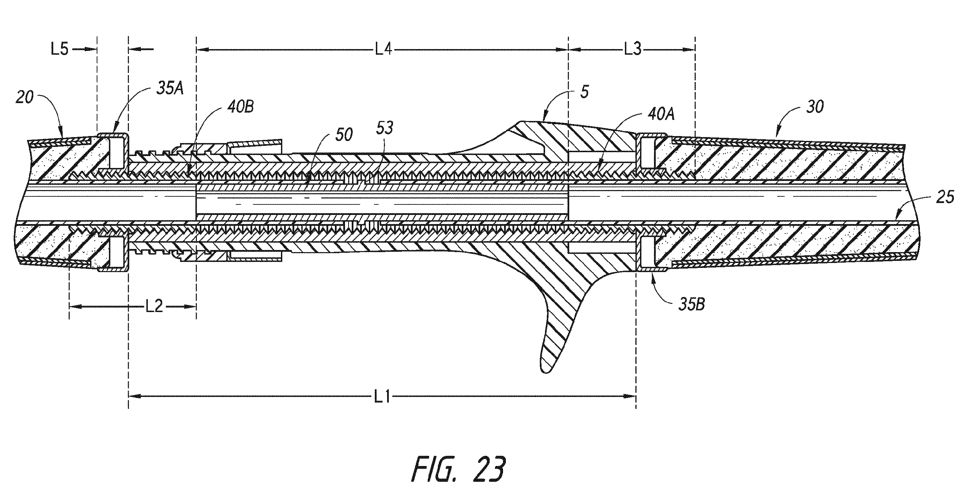

Fig. 23 is a cross-sectional view of components in an embodiment of a multi-component handle assembly showing the connection of a reel seat 5 to a main shaft 15 and a handle shaft 25. In some embodiments the threaded regions 40A and 40B may be approximately the same length, L2 and L3 respectively, as shown in Fig. 23. The threaded regions 40A and 40B may be configured to fit at least partially under the respective grip 20 or 30. In some embodiments, the threaded regions 40A and 40B stop adjacent to the grip 20 or 30 before extending under the grip.

In some embodiments, the connector 50 may be configured to have a length L4 at least long enough such that it will be partially inserted into the main shaft 15 and the handle shaft 25. In some embodiments, the connector 50 may be partially hollow to reduce the weight of the connector while providing additional support for the connection. In some embodiments the connector 50 may be solid, or the connections may be assembled without a connector 50. The stop 53 may be configured to have an outer diameter larger than the inner diameter of the end of the handle shaft 25 or the end of the main shaft 15 such that the connector 50 does not slide completely into one shaft or the other. In some embodiments, the components may be connected without a connector 50. For example, the inner threaded region 45 of the reel seat 5 mated with the outer threaded regions 40A and 40B of the shaft components may provide sufficient structure such that additional support from a connector is not necessary.

In some embodiments, the inner threaded region 45 may be configured to have a longitudinal length L1 the same as or shorter than the length of the reel seat 5 such that either end of the reel seat 5 may contact the alignment stop 35A or 35B such that there is a substantially smooth transition from one component to another.

In some embodiments, as shown in Fig. 23, the shaft components extend substantially into the reel seat 5. In some embodiments, the threaded regions 40A and 40B are attached near the end of the shaft components 15 and 25 such that the threaded portions mate along a maximum surface area for additional support. In some embodiments there may be a section of the main shaft 15 or the handle shaft 25 that extends past the threaded regions 40A and 40B into the reel seat 5.

In some embodiments, the alignment brakes 35A and 35B may have a longitudinal width of L5. The width of L5 may such that a cavity 39 is formed in the alignment brake 35 such that a grip may partially fit inside the alignment brake 35 as shown in Fig. 23. In some embodiments, the length L5 may be shorter to provide a smaller transition section between the reel seat 5 and the fore grip 20 or rear grip 30. In some embodiments, the length L5 may be longer to facility accepting a portion of the fore grip 20 or the rear grip 30 with the reel seat and the grips in alignment such that the process of aligning the grips may be simpler. For example, the threading may be spaced further in such situation to reduce the sensitivity of adjusting the alignment brakes. In some embodiments, a user may be able to adjust the length of the handle assembly during alignment of the reel seat with one of the grip portions. For example, a user may be able to screw an alignment brake and reel seat further toward one of the grips to shorten the length of the overall handle assembly. In order to lengthen the handle assembly, the user may back the reel seat and alignment brake off of the grip to lengthen the handle assembly. Thus, in some embodiments, the handle assembly may be shortened or lengthened by adjusting the portion of the grip that is covered by the gap in the alignment brake. In some embodiments, a user may move the alignment brake, and therefore the reel seat, further from a grip by moving the alignment brake off of the grip and leaving a gap between the grip and the alignment brake.

Fig. 24 is a flow chart illustrating an exemplary method of constructing a fishing pole from modular components. Beginning in block 200, a threaded adapter is attached to the end of the main rod shaft. This may be the threaded region 35A described in reference to Fig. 3 and Fig. 8 above. For example, the threaded adaptor may be a hollow rod with external threading. The inner diameter of the threaded rod may be slightly larger, but similar in size to the outer diameter of the main shaft at the point of attachment. The threaded adapter may then be attached to the main shaft using silicone rubber, another adhesive, or otherwise secured to the shaft. In some embodiments, a process of affixing threading to the main shaft in block 200 is unnecessary, for example, the main shaft may already have threading attached, or the main shaft may have been constructed with threading integrally formed in the shaft.

Moving on to block 210, a threaded adapter is attached to the end of the handle shaft. For example, the threaded adaptor may be a hollow rod with external threading. The inner diameter of the threaded rod may be slightly larger, but similar in size to the outer diameter of the handle shaft at the point of attachment. The threaded adapter may then be attached to the handle shaft using silicone rubber, another adhesive, or otherwise secured to the shaft. In some embodiments, a process of affixing threading to the handle shaft in block 210 is unnecessary, for example, the handle shaft may already have threading attached, or the handle shaft may have been constructed with threading integrally formed in the shaft.

In block 220, a threaded insert is affixed in the reel seat. For example, the threaded insert may be a hollow rod with internal threading. The internal threading may be configured to mate with the external threaded regions on the main shaft and handle shaft. The inner diameter of the reel seat may be similar in size to the outer diameter of the threaded insert such that the threaded insert fits into the reel seat. In some embodiments, a reel seat may be bored to have a larger longitudinal hollow cavity there through such that an interior diameter of the reel seat is large enough and parallel enough to accept a threaded insert to be attached. The threaded adapter may then be attached to the reel seat using silicone rubber, another adhesive, or otherwise secured to the reel seat. In some embodiments, a process of affixing threading to the reel seat in block 220 is unnecessary, for example, the reel seat may already have threading attached, or the reel seat may have been constructed with threading integrally formed in the reel seat.

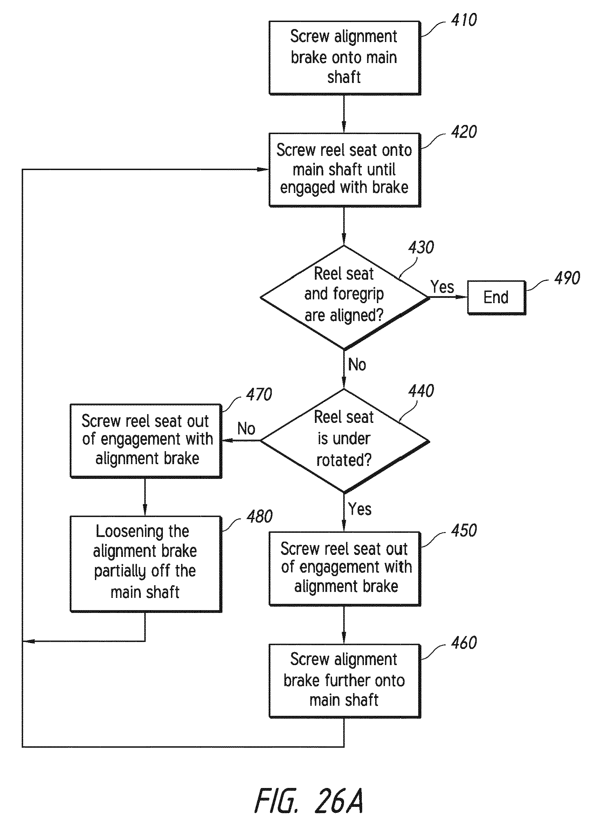

Moving on to block 230, the reel seat is attached to the main shaft. For example, the threaded insert may be screwed onto the threaded region of the main shaft that was attached in block 200. In some embodiments, the threaded region of the main shaft and the reel seat may be constructed such that the components align automatically when the reel seat is tightened onto the threaded region. In some embodiments, the reel seat and the main shaft do not need to be aligned. In some embodiments, the reel seat and the main shaft may be aligned using an alignment brake as described further below in reference to Fig. 26A.

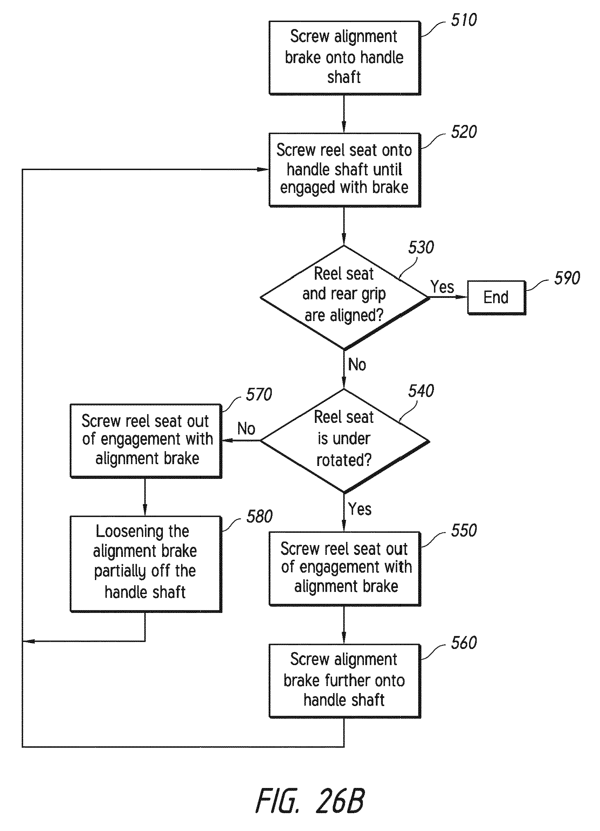

Moving on to block 240, the reel seat is attached to the handle shaft. For example, the threaded insert attached to the reel seat may be screwed onto the threaded region of the handle shaft that was attached in block 210. In some embodiments, the threaded region of the handle shaft and the reel seat may be constructed such that the components align automatically when the reel seat is hand tightened onto the threaded region. In some embodiments, the reel seat and the handle shaft do not need to be aligned. For example, the handle shaft may be rotationally symmetrical and alignment is unnecessary. In some embodiments, the reel seat and the handle shaft may be aligned using an alignment brake as discussed above and described further below in reference to Fig. 26B. In some embodiments, the block illustrated in Fig. 23 may be performed in a different order. For example, the threaded adaptor and inserts may be affixed to their respective shafts or reel seat in any order. Furthermore, the reel seat may be attached to the handle shaft before it is attached to the main shaft, and one or more components may be attached according the blocks 230 or 240 before each threaded adaptor or insert is affixed in blocks 200, 210, or 220.

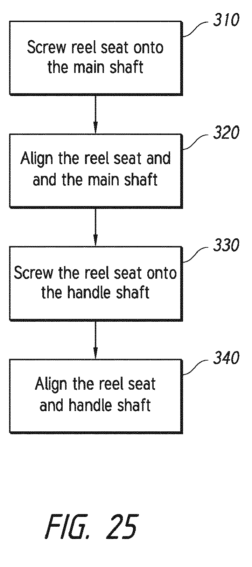

Fig. 25 is a flow chart illustrating an exemplary method of assembling a fishing pole from modular components. Beginning in block 310, the reel seat component of a fishing pole is screwed onto the main shaft component. Moving on to block 320, the reel seat component and the main shaft component are aligned. For example, the main shaft component may have a grip attached that should be lined up with the reel seat. In addition, the line guides on the main shaft of the fishing pole should be aligned with the reel seat to allow proper operation of the fishing reel. In some embodiments, the process of aligning the reel seat with the main shaft may be performed according to the method described in reference to Fig. 26A below.

In block 330, the reel seat component is screwed onto the handle shaft. Moving on to block 340, the reel seat component and the main shaft component are aligned. For example, the handle shaft component may have a grip attached that should be lined up with the reel seat. In some embodiments, the handle shaft and attached grip or grips are rotationally symmetrical and do not need to be aligned with the reel seat. In some embodiments, the process of aligning the reel seat with the main shaft may be performed according to the method described in reference to Fig. 26B below.

Fig. 26A is a flow chart illustrating an embodiment of a method for aligning a reel seat component with a main shaft using an alignment brake. Beginning in block 410, an alignment brake is screwed onto a threaded region of the main shaft. The alignment brake will be used to set the stop location for the reel seat as it is screwed onto the main shaft. Moving on to block 420, the reel seat is screwed onto the main shaft until it engages with the alignment brake. When the reel seat engages the brake, the longitudinal force of the reel seat against the brake produces enough friction between the internal threading of the brake and the external threading of the main shaft that the brake stops the reel seat from tightening further onto the main shaft. Thus, the alignment of the reel seat is set by the rotational point at which it engages with the alignment brake. Moving on to block 430, in some circumstances, the reel seat and the main shaft may be aligned at this point. If the components are in alignment, the method moves on to block 490 and the alignment is complete.

If the components are not in alignment, the method moves on to block 440 and determines if the if the reel seat is under rotated or over rotated from alignment with the fore grip on the main shaft. In some embodiments, the main shaft may not have a fore grip. Instead, the reel seat may be compared for alignment with one or more line guides on the main shaft, or with another component of the main shaft. The reel seat may be considered under rotated with respect to the main shaft if rotating the reel seat further onto the main shaft would bring the reel seat into alignment with fewer degrees of rotation than rotating the reel seat back off of the main shaft. The reel seat may be considered over rotated with respect to the main shaft if rotating the reel seat back off of the main shaft would bring the reel seat into alignment with fewer degrees of rotation than rotating the reel seat further onto the main shaft.

If the reel seat is under rotated, the process continues to block 450 and the reel seat is loosened out of engagement with the alignment brake. Then, in block 460, the alignment brake is screwed further onto the main shaft. The alignment brake may preferably be rotated to a degree corresponding to the degree to which the reel seat was out of alignment. For example, if the reel seat was 30 degrees under rotated, the alignment brake may be rotated approximately 30 degrees to compensate for the under rotation. Then, when the reel seat is brought back into engagement with the alignment brake, the reel seat may be properly aligned with the fore grip on the main shaft.

If the reel seat is over rotated, the process continues to block 470 and the reel seat is loosened out of engagement with the alignment brake. Then, in block 480, the alignment brake is screwed further onto the main shaft. The alignment brake may preferably be rotated to a degree corresponding to the degree to which the reel seat was out of alignment. For example, if the reel seat was 10 degrees over rotated, the alignment brake may be rotated approximately 10 degrees to compensate for the over rotation. Then, when the reel seat is brought back into engagement with the alignment brake, the reel seat may be properly aligned with the fore grip on the main shaft.

After repositioning the alignment brake in either block 460 or 480, the method may return to block 420 and the reel seat is brought back into engagement with the brake. The alignment may then be tested again in block 430. If the reel seat is now aligned, the method is complete. However, if the reel seat is not aligned with the main shaft, the system may go through another iteration of positioning the alignment brake to properly align the main shaft with the reel seat.

Fig. 26B is a flow chart illustrating an embodiment of a method for aligning a reel seat component with a handle shaft using an alignment brake. Beginning in block 410, an alignment brake is screwed onto a threaded region of the handle shaft. The alignment brake will be used to set to stop location for the reel seat as it is screwed onto the handle shaft. In some processes of assembling the components of a fishing pole, the handle component may be screwed into the reel seat instead of the reel seat being screwed onto the handle component. However, methods illustrated in the flow chart of Fig. 26B will align the reel seat and the grip of the handle component in either circumstance if viewed from the perspective of the reel seat screwing onto the handle component. Moving on to block 420, the reel seat is screwed onto the handle shaft until it engages with the alignment brake. When the reel seat engages the brake, the longitudinal force of the reel seat against the brake produces enough friction between the internal threading of the brake and the external threading of the handle shaft that the brake stops the reel seat from tightening further onto the handle shaft. Thus, the alignment of the reel seat is set by the rotational point at which it engages with the alignment brake. Moving on to block 430, in some circumstances, the reel seat and the handle shaft may be aligned at this point. If the components are in alignment, the method moves on to block 490 and the alignment is complete.

If the components are not in alignment, the method moves on to block 440 and determines if the if the reel seat is under rotated or over rotated from alignment with the rear grip on the handle shaft. The reel seat may be considered under rotated with respect to the handle shaft if rotating the reel seat further onto the handle shaft would bring the reel seat into alignment with fewer degrees of rotation than rotating the reel seat back off of the handle shaft. The reel seat may be considered over rotated with respect to the handle shaft if rotating the reel seat back off of the handle shaft would bring the reel seat into alignment with fewer degrees of rotation than rotating the reel seat further onto the handle shaft.

If the reel seat is under rotated, the process continues to block 450 and the reel seat is loosened out of engagement with the alignment brake. Then, in block 460, the alignment brake is screwed further onto the handle shaft. The alignment brake may preferably be rotated to a degree corresponding to the degree to which the reel seat was out of alignment. For example, if the reel seat was 30 degrees under rotated, the alignment brake may be rotated approximately 30 degrees to compensate for the under rotation. Then, when the reel seat is brought back into engagement with the alignment brake, the reel seat may be properly aligned with the rear grip on the handle shaft.

If the reel seat is over rotated, the process continues to block 470 and the reel seat is loosened out of engagement with the alignment brake. Then, in block 480, the alignment brake is screwed further onto the main shaft. The alignment brake may preferably be rotated to a degree corresponding to the degree to which the reel seat was out of alignment. For example, if the reel seat was 10 degrees over rotated, the alignment brake may be rotated approximately 10 degrees to compensate for the over rotation. Then, when the reel seat is brought back into engagement with the alignment brake, the reel seat may be properly aligned with the rear grip on the handle shaft.

After repositioning the alignment brake in either block 460 or 480, the method may return to block 420 and the reel seat is brought back into engagement with the brake. The alignment may then be tested again in block 430. If the reel seat is now aligned, the method is complete. However, if the reel seat is not aligned with the handle shaft, the system may go through another iteration of positioning the alignment brake to properly align the handle shaft with the reel seat.

### Reel Seat Component with Gripping Surface

There are many fishing poles used in the sport of fishing. The most common grips have utilized ethylene vinyl acetate or cork to provide a gripping surface. New improvements to grips have introduced previously unavailable opportunities to enhance various visual and performance aspects of fishing pole grips. However, reel seats of fishing poles have not been modified to take advantage of the new materials.

In one embodiment disclosed herein, a reel seat is provided with an improved gripping surface for providing better comfort and control while maintaining transmittal of vibrations through the rod and methods for producing such reel seats. For purposes of this summary, certain aspects, advantages, and novel features of the invention are described herein. It is to be understood that not necessarily all such advantages may be achieved in accordance with any particular embodiment of the invention. Thus, for example, those skilled in the art will recognize that the invention may be embodied or carried out in a manner that achieves one advantage or group of advantages as taught herein without necessarily achieving other advantages as may be taught or suggested herein. In addition, embodiments of these reel seats may be used as a reel seat component for use with the multi-component fishing pole described herein.

### I. Overview

Disclosed herein are reel seats for use securing a fishing reel to a fishing pole, methods of making such reel seats, and fishing poles with such reel seats attached. In some embodiments, the reel seats as disclosed herein have a grip portion that provides transmission of vibrations from the fishing rod, aesthetic appeal, and a comfortable surface. Fishing poles generally include a reel seat which is configured to receive and secure a fishing reel for operation with the pole. Fishing reels typically are secured to a fishing pole with a reel seat which receives the reel foot of the fishing reel. While fishing, an angler often desires to feel the transmission of rod vibrations through the handle of the pole. Thus, reel seats are often made out of graphite or aluminum to allow the transmission from the shaft of the pole to the angler's hand. However, such reel seats often lack comfort compared to other materials and may also lack tackiness, particularly when wet, which is beneficial to the angler. The embodiments disclosed herein offer transmission of vibrations through the reel seat while also providing a comfortable, functional, and aesthetically pleasing gripping surface on the reel seat.

Embodiments of the present invention provide a lightweight/low density griping surface with sufficient torsion resistance on at least portions of a reel seat. In some embodiments, a finished grip portion of a reel seat may include a resilient material that is resilient relative to the structural portion of the seat that holds the reel to the pole. In some embodiments, a finished grip portion of a reel seat may include a combined polyurethane/thin fabric layer adhered to an EVA base layer. In some embodiments, this may provide a lightweight water resistant grip on the surface of a reel seat, while still providing the sensitive vibration feel and structural benefits to be able to float on water even when wet.

In some embodiments, the surface of a reel seat may include one or more recesses which may be configured to receive a supplemental gripping material. For example, the gripping material may be one as described in U.S. Patent Application No. 12/753,669 filed April 2, 2010, now U.S. patent no. 8,518,505, which is hereby incorporated herein by reference in its entirety. In some embodiments, the gripping material of a fore grip, rear grip, and/or butt grip may be made of the same or a similar material. In some embodiments, the gripping material may instead be generated with injection molding, 3D printing, or another appropriate process.

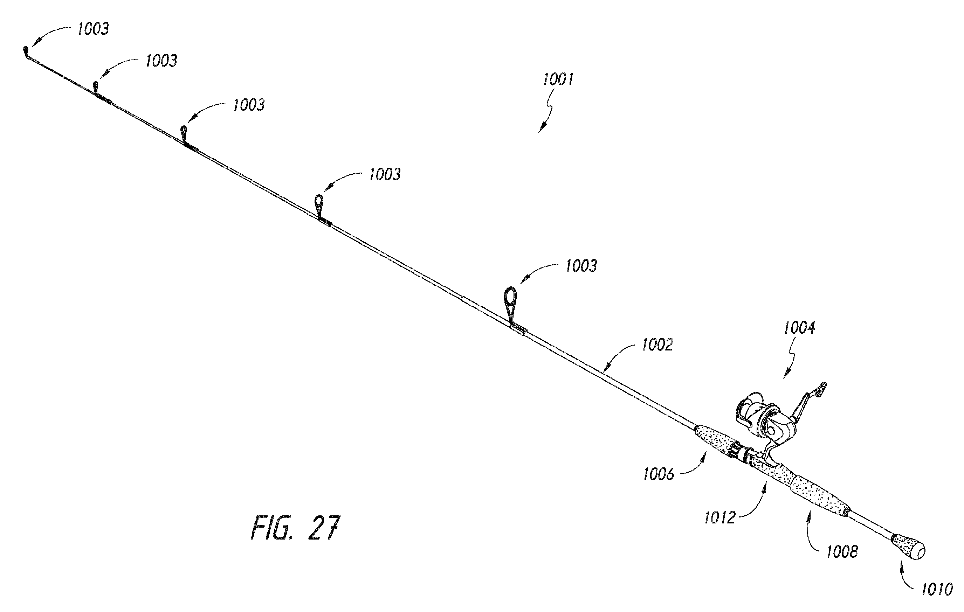

Figure 27 depicts a fishing pole 1001 including a reel seat 1012 as disclosed herein. Fishing poles generally have several basic components including: a shaft of the pole 1002 (which may be in several pieces), a series of eyelets or line guides 1003, a reel seat 1012, and a series of grips 1006, 1008, and 1010. The handle depicted in Figure 27 includes a fore grip 1006, and a rear grip 1008, which may be split in some embodiments to include a butt cap 1010. The reel seat 1012 is configured to receive and secure a fishing reel 1004. Reel seats generally comprise two insert portions which each receive one end of the foot of a fishing reel. In some embodiments, at least one of the insert portions is adjustable to secure the fishing reel in position. In some embodiments, an insert portion may comprise a cutout sleeve, an adjustable sleeve, a clamp, or another mechanism to secure one end of a fishing reel in position. There are a variety of types of fishing reels which can be chosen based on performance requirements and angler preference. Common types of reels include baitcast, spincast, spinning, trolling, and fly reels, for example. The embodiment depicted in Figure 27 includes a spinning reel, however, the reel seats as described herein may be configured to receive any of these types of fishing reels.

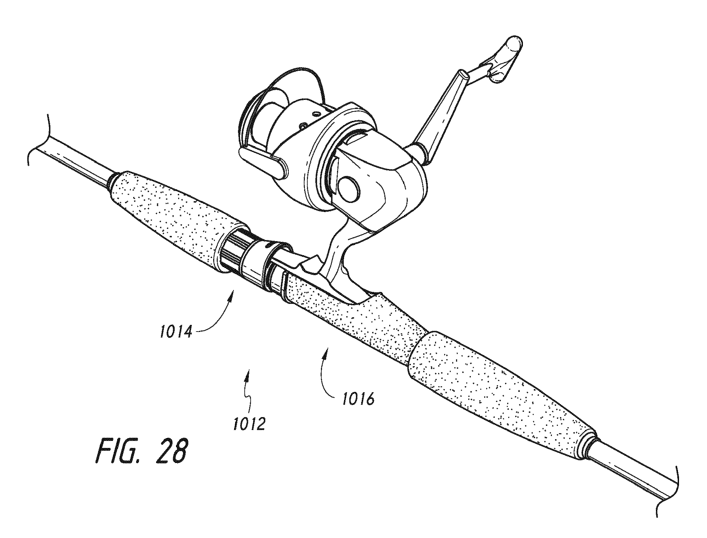

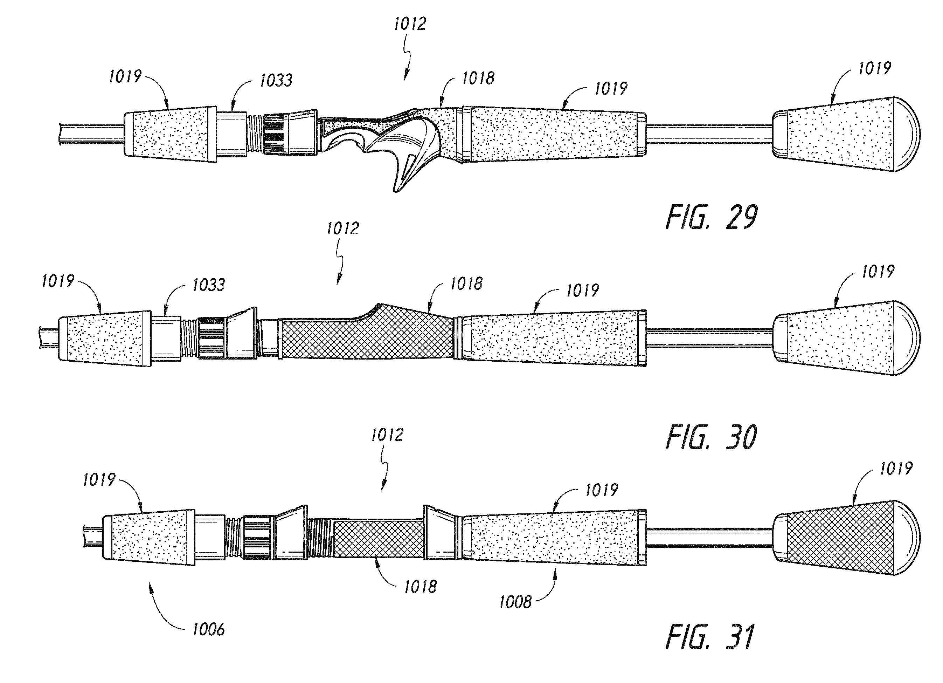

Figure 28 depicts a closer view of the handle portion of a fishing pole including a reel seat 1012 as disclosed herein. In some embodiments, the reel seat includes a main body portion 1016 and a securing portion 1014. The components of the main body portion 1016 and the securing portion 1014 as implemented in some embodiments are configured to receive a variety of fishing reels of various sizes and designs are described in detail below. Figures 29-31 depict fishing poles with reel seats configured to receive various fishing reels. Figure 29 depicts an embodiment of a fishing pole with a reel seat 1012 configured to receive a baitcast or spincast reel. Figures 30 and 31 depict fishing poles with reel seats 1012 configured to receive spinning reels. The reel seats 1012, as depicted in the embodiments of Figs. 29-31 include a gripping member 1018 that provides improved performance characteristics. In some embodiments, the reel seats may have different configurations or may be configured to receive different styles of fishing reels.

In some embodiments, the gripping member 1018 may be manufactured as the same material used as a gripping portion 1019 of the foregrip 1006, rear grip 1008, or butt cap 1010 of a fishing pole. For example, Fig. 29 illustrates a fishing pole having a gripping member 1018 with one or more consistent characteristic between the foregrip 1006, rear grip 1008, reel seat 1012, and butt cap 1010. In some embodiments, the gripping member 1018 present on the reel seat is configured to match the design of the other portions of the handle, but may be made out of a different material. In some embodiments, the gripping member 1018 may be made out of different materials and have a different design than those used as a gripping portion 1019 of the foregrip 1006, rear grip 1008, or butt cap 1010, for example, as shown in Fig. 30. In some embodiments, the gripping member 1018 may match some other gripping portions of a fishing pole handle, but may not match all of the handle portions. For example, as shown in Fig. 31, the gripping member 1018 uses the same or similar material or design as the rear grip 1008, but does not use the same or similar material or design as the butt grip 1010.

In some embodiments, the gripping member 1018 may comprise a thin flexible panel which may be bonded, adhered, or otherwise attached to the reel seat 1012. The gripping member 1018 may, in some embodiments, be made out of an injection molded polymer configured to be attached to the reel seat 1012. In some embodiments the gripping member 1018 may be manufactured as a rigid component, such as a hard plastic, for attaching to the reel seat 1012. Example materials that may be used in the gripping member 1018 in some embodiments are described further below. In some embodiments, the gripping member 1018 may be manufactured in several pieces that attach together to form the desired shape for the reel seat 1012. For example, the gripping member 1018 may be manufactured as top and bottom portions or left and right portions, which when connected form the desired shape for the reel seat 1012. In some embodiments, a gripping member 1018 is deposited onto the reel seat 1012 in the desired locations.

Although several embodiments, examples, and illustrations are disclosed, it will be understood by those of ordinary skill in the art that the inventions described herein extend beyond the specifically disclosed embodiments, examples, and illustrations and includes other uses of the inventions and obvious modifications and equivalents thereof. Embodiments of the inventions are described with reference to the accompanying figures, wherein like numerals refer to like elements throughout. The terminology used in the description presented herein is not intended to be interpreted in any limited or restrictive manner simply because it is being used in conjunction with a detailed description of certain specific embodiments of the inventions. In addition, embodiments of the inventions can comprise several novel features and no single feature is solely responsible for its desirable attributes or is essential to practicing the inventions herein described.

### II. Baitcasting reel seat

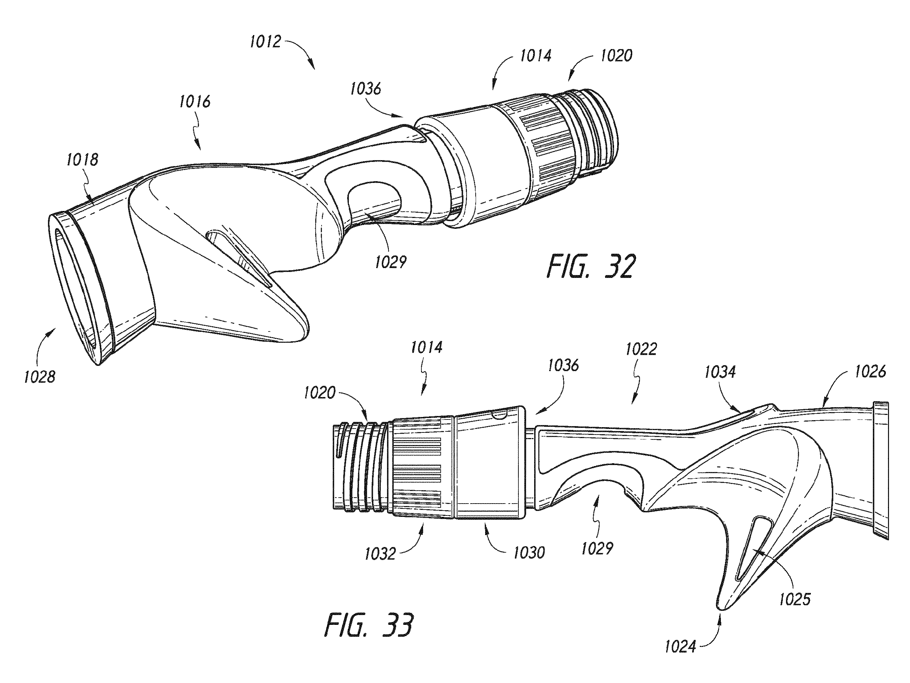

In some embodiments, such as depicted in Figs. 32-38, the reel seats disclosed herein may be configured to receive and secure a baitcasting reel. Such embodiments or similar embodiments may also be configured to receive and secure spincasting reels. In some embodiments the reel seat 1012 comprises a main body portion 1016 and a securing portion 1014. In some embodiments, the main body portion includes some or all of the securing portion. The main body portion 1016 may comprise a threaded region 1020, a reel foot receiving area 1022, a trigger 1024, a longitudinal cavity 1028, and a recessed receiving portion 1026 which is configured to receive a gripping member 1018. As shown in Figs. 32-38, the main body portion 1016 can define a first end and a second end. In some embodiments, the first end is fixed to the gripping portion 1019. In some embodiments, the first end can be fixed directly to a handle portion of a fishing pole 1001. The second end of the main body portion 1016 can be adjustable. In some embodiments, the second end can be configured to receive a foregrip of a plurality of different foregrips. As discussed below, the second end can include the threaded region 1020.

The securing portion 1014 can comprise a first insert portion and a second insert portion. The first insert portion can be configured to receive a first portion of the fishing reel arm. The second insert portion can be configured to receive a second portion of a fishing reel arm. The first insert portion can be disposed closer to the first end of the main body portion 1016 than the second insert portion. The first insert portion can be fixed relative to the main body portion. In some embodiments, the first insert portion can be configured to translate longitudinally along the main body portion 1016 of the reel seat 1012. The first insert portion can be positioned opposite the second insert portion. The second insert portion can be configured to translate longitudinally along the main body portion 1016 of the reel seat 1012. In some embodiments, the securing portion may comprise an adjustable sleeve 1030 and a securing nut 1032. The main body portion 1016 may be constructed primarily from aluminum, graphite, a polymer material, or other materials. The securing portion 1014 may be constructed from the same material as the main body portion, or may be constructed from another material.

The main body portion 1016 comprises an interior longitudinal cavity 1028 configured to receive the handle portion of a fishing pole 1001. The longitudinal cavity 1028 can extend from the first end of the main body portion to the second end of the main body portion. In some embodiments, the interior longitudinal cavity 1028 may be substantially cylindrical in shape. For example, in some embodiments, the interior cavity 1028 may have an interior diameter substantially similar in size as the handle portion of a compatible fishing pole to enable instillation of the reel seat on the fishing pole. In some embodiments the interior cavity 1028 may have a diameter larger than the handle portion of a compatible fishing pole handle to receive a variety of sizes of fishing poles. In some embodiments the longitudinal cavity 1028 is substantially parallel, in other embodiments the cavity may be tapered to accommodate particular fishing pole handles and fit securely. In some embodiments, a tapered longitudinal cavity may advantageously aid in positioning the reel seat in an appropriate location along the handle of a reel seat. In some embodiments, the longitudinal cavity 1028 may have one or more cut out portions 1029 which expose a portion of a fishing pole when the reel seat is mounted on the fishing pole. Preferably, one or more cut-out portions 1029 may be positioned such that an angler using the fishing pole with attached reel seat may grip the reel seat when fishing in a way enabling the angler to directly feel the fishing pole. This may enable direct transmission of vibrations from the fishing pole to the angler while the angler is also able to substantially grip a comfortable gripping member 1018 attached to the reel seat 1012. In some embodiments, the main body portion may be split into two distinct pieces to provide this feature as well as to reduce the overall weight of the reel seat.

In some embodiments, the main body portion 1016 of a reel seat 1012 configured to secure a baitcasting reel may also include a finger portion. In some embodiments, the fishing reel seat may include the plurality of finger portions configured to accept one or more fingers of an angler's gripping hand. For example, as illustrated in Fig. 33, the finger portion can include a first finger portion and a second finger portion of the plurality of finger portions. The first finger portion can include a trigger 1024. The trigger 1024 can be configured to receive a first finger of an angler's hand. In some embodiments, the trigger 1024 can be configured to receive multiple fingers of an angler's hand. The trigger 1024 may be positioned on the reel seat 1012 such that when a compatible fishing reel is secured, an angler may naturally grip the trigger portion with one or more fingers of the anglers gripping hand. As shown in Figs. 32-38 for example, the trigger 1024 can extend downwardly from the main body portion. The trigger 1024 can extend below a periphery of the main body portion. In some embodiments, the trigger 1024 can extend a distance below a periphery of the main body portion approximately 2/3 the length of an outer diameter of the main body portion 1016.

In some embodiments, the trigger 1024 may be a solid feature. In some embodiments, the trigger 1024 may instead be a hollow or partially hollow feature instead of a solid feature. For example, as shown in Fig. 33, the trigger 1024 includes a hollow portion 1025. In various embodiments of the reel seats as disclosed the trigger may comprise hollow portions of a variety of shapes and sizes. Including a hollow portion of the trigger may reduce the overall weight of the reel seat as well as the materials required to manufacture the reel seat. In addition, hollow portions may be aesthetically pleasing. In some embodiments, the second finger portion can include the cut-out portion 1029. As shown in Fig. 33, the cut-out portion 1029 can be configured to receive a second finger of an angler's hand.

The main body portion 1016 of a reel seat as disclosed comprises securing portion 1014 including a foot receiving area 1022 configured to receive a foot portion of a compatible fishing reel. In some embodiments, the foot receiving area 1022 of a reel seat 1012 may be substantially flat portion with a first insert portion, for example a cutout sleeve 1034, on one end facing second insert potion, for example an adjustable sleeve 1030 on the other end. In some embodiments, the cutout sleeve and the adjustable sleeve may be on opposite ends of the reel seat. In some embodiments other insert portions or combinations of insert portions may be used to receive a fishing reel. For example, the reel seat includes to adjustable sleeves, a cutout sleeve and a clamp, a clamp and an adjustable sleeve, or other combinations. The flat portion may be similar in shape and size to the foot of a compatible fishing reel. The cutout sleeve 1034 may be shaped to receive one side of a fishing reel foot. In some embodiments the cutout sleeve may be tapered to securely fasten fishing reels with feet of a variety of sizes.

In some embodiments, opposite from the cutout sleeve 1034 there may be an adjustable sleeve 1030 aligned to receive the other end of the fishing reel foot. The adjustable sleeve 1030 may have an inner geometry substantially the same size and shape as the external geometry of the main body portion of the reel seat. The adjustable sleeve 1030 may include a foot receiving portion configured to receive one end of a fishing reel foot. In some embodiments, the adjustable sleeve 1030 may include a portion configured to extend radially beyond the outer geometry of the main body portion 1016 such that there is a gap between the adjustable sleeve 1030 and the main body portion 1016 that creates a cavity 1036 which may be configured to accept a portion of the foot of a compatible fishing reel. The cavity 1036 of the adjustable sleeve 1030 may be substantially similar in size to the cutout sleeve 1034 of the reel seat. In some embodiments, the reel seat comprises two adjustable sleeves 1030 with cavities 1036 facing one another instead of providing a cutout sleeve 1034 and an adjustable sleeve 1030.

In some embodiments, the adjustable sleeve 1030 may also include an alignment ridge 1038 configured to align the adjustable sleeve 1030 with the cutout sleeve 1034. The alignment ridge 1038 is configured to track in an alignment recess 1040 located on the main body portion 1016 of the reel seat 1012. As shown in the figures, the ridge is placed radially opposite the cavity 1036, however, the ridge 1038 may be placed elsewhere on the adjustable sleeve. In some embodiments, the adjustable sleeve 1030 may not have an alignment ridge 1038 or may have more than one alignment ridge 1038. In some embodiments, the adjustable sleeve 1030 has an alignment recess instead of an alignment ridge. In such embodiments, the main body portion of the reel seat may include an alignment ridge instead of an alignment recess. In some embodiments, the adjustable sleeve is constructed from a single material. In some other embodiments, the adjustable sleeve is constructed from more than one material. For example, the adjustable sleeve 1030 may be constructed primarily from a plastic material, but may comprise an aluminum support ring for additional support. In some embodiments, a support ring may be constructed from other materials.

The adjustable sleeve may be adjusted nearer or further from the cutout sleeve using a securing nut 1032. The securing nut 1032 is configured to fit the threading on the threaded region 1020 of the main body portion 1016. In some embodiments, the securing nut 1032 may be attached to the adjustable sleeve 1030, such that the adjustable sleeve 1030 moves along the main body portion 1016 in one direction when the securing nut 1032 is turned clockwise and in the other direction when the securing nut 1032 is turned counter-clockwise. In some embodiments, the securing nut 1032 may not be attached to the adjustable sleeve 1030, but may be configured to secure the adjustable sleeve 1030 over one part of a fishing reel foot. The securing nut 1032 and the adjustable sleeve 1030 may be constructed from the same material or from different materials. In some embodiments a foregrip 1006 of the fishing pole 1001 is configured such that the securing nut 1032 may fit over at least a portion of the foregrip 1006. This may enable a larger fishing reel to fit without requiring a larger reel seat. For example, if the securing nut 1032 did not fit over the foregrip 1006, the distance between the cutout sleeve 1034 and the adjustable sleeve 1030 would be limited by the length of the reel seat 1012. However, if the securing nut fits over a first portion of the foregrip, the space between the cutout sleeve 1034 and the adjustable sleeve 1030 is extended such that it is limited by the length of the reel seat 1012 and the additional area 1033 on the foregrip 1006 over which the securing nut 1032 fits.

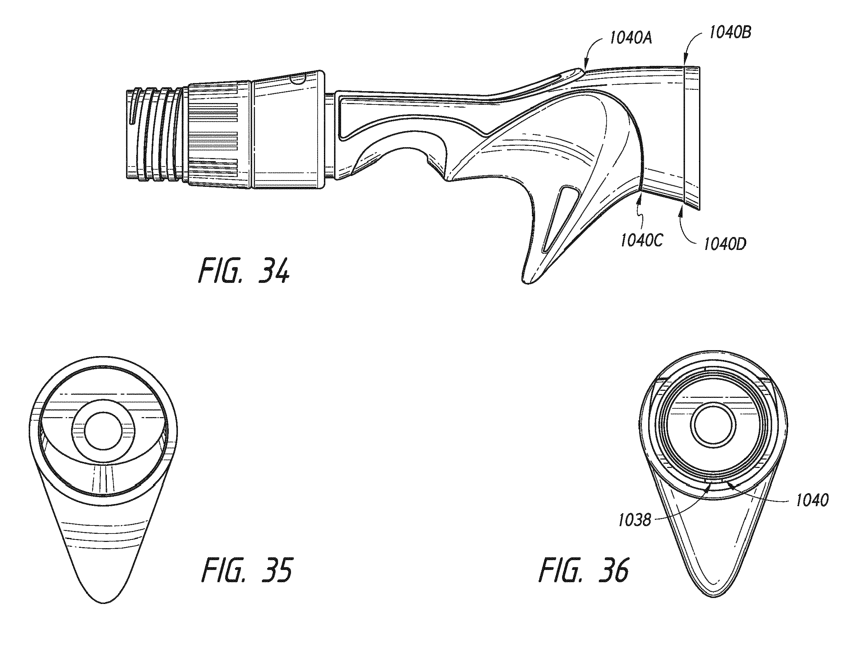

The main body portion 1016 of the reel seat 1012 may also include a recessed area 1026 configured to receive a gripping member 1018. The recessed area 1026 may be positioned on the main body portion 1016 in a manner that will present the gripping member 1018 to an angler's hand when an angler is using the fishing pole. The recessed area 1026 may also be located around the main body portion 1016 in a manner that provides an aesthetically pleasing configuration. As shown in the Fig. 33 and 34, in some embodiments, the recessed area 1026 is of a depth D substantially the same as the thickness T of a gripping material 1018 it is configured to receive. This provides a smooth transition from portions of the reel seat with gripping material to those without gripping material after the gripping material is attached to the reel seat. For example, as shown at points 1040A, 1040B, 1040C, and 1040D of Fig. 34, the transition from the gripping member 1018 to corresponding non-recessed portions of the main body portion 1016 of the reel seats. The recessed area 1026 may be of a depth of about between 1 mm and 2 mm. In some embodiments, the recess may be shallower or deeper depending on the thickness of the material to be attached or a thickness that provides desired grip characteristics, such as transmission of vibrations or comfort, for example. The gripping member 1018 preferably provides a comfortable and/or aesthetically pleasing surface on the main body portion 1016 in contrast to the rigid and structurally robust main portion that must securely support the reel on the pole.

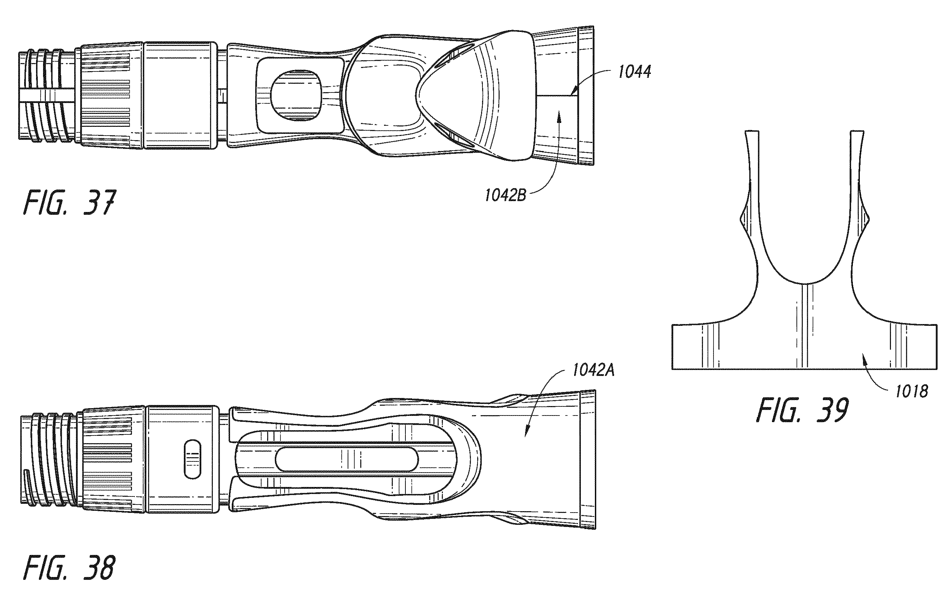

In some embodiments, for example, as depicted in Figs. 32-38, the recessed area 1026 can include a thumb portion. In some embodiments, the thumb portion is shaped to receive a gripping member 1018 to present a gripped surface in a natural resting position for an anglers thumb. For example, as depicted at area 1042A of Fig. 38, the natural resting place for an angler's thumb is presented to the angler. As illustrated in Fig. 38, the thumb portion can be approximately less than half the length of the main body portion 1016. In some embodiments, the thumb portion is less than half of the length of the securing portion. In some embodiments, the recessed area 1026 is also configured such that the gripping member 1018 presents a gripping surface around the reel seat 1012 in a configuration which provides grip to around the handle portion of the pole where an angler would hold the handle. For example, as depicted at area 1042B of Fig. 37, the gripping member 1018 fits the recessed area 1026 such that an angler may grip the handle on the gripping surface. In some embodiments, the recess may be configured such that a gripping portion may be provided on the trigger, along the bottom of the reel seat, or on any other portion of the reel seat.

As illustrated in Figs. 32-38, the thumb portion is disposed on a first side of the main body portion 1016 of the reel seat 1012. The first side of the main body portion can be disposed above a longitudinal axis of the main body portion 1016 running through the center of the reel seat 1012 from the first end to the second end of the main body portion 1016. The thumb portion can extend from the first end of the main body portion 1016 towards the second end. In some embodiments, the thumb portion is parallel to the longitudinal axis. In some embodiments, the thumb portion extends from the first side towards a second side of the main body portion. As illustrated in Figs. 32-38, the thumb portion can be positioned opposite the finger portion. For example, the finger portion can be positioned on the second side of the main body portion 1016. The second side of the main body portion 1016 can be disposed below the longitudinal axis of the main body portion 1016. The second side of the main body portion 1016 can be disposed opposite the first side of the main body portion. The thumb portion can extend from the first end of the main body portion 1016 over a portion of the finger portion. In some embodiments the thumb portion and the finger portion do not overlap.

Fig. 39 depicts an embodiment of the shape of a gripping member 1018 configured to be attached to the main body portion 1016 of the reel seat 1012 as shown in the Figs 32-38. In some embodiments, the gripping member 1018 is of a different shape to match a different recessed area 1026 or a different main body portion 1026 of a reel seat. In some embodiments, an outer periphery of the gripping member can correspond to the recessed area shape. As shown in the Fig. 39, the gripping member 1018 may be manufactured in a flat shape which can then be wrapped around the reel seat 1012 or otherwise shaped to fit the design of the main body portion 1016. As shown in Fig. 39, the gripping member 1018 can include a base portion and one or more extension portions. The base portion can wrap around the main body portion 1016 of the reel seat 1012 at a location near the first end of the main body portion. In some embodiments the base portion wraps around only a portion of the main body portion. In some embodiments, the base portion wraps around the main body portion 1016 and forms a seam 1044. In some embodiments the extension portions of the gripping member 1018 can extend from the base portion towards the second end of the main body portion. In some embodiments, the extension portions extend along the main body portion perpendicular to a vertical axis of the main body portion. In some embodiments, the extension portions extend along the main body portion angled inwardly. In some embodiments, the extension portions extend along a substantial length of the main body portion 1016. Portions of the extension portions can be disposed above the longitudinal axis of the main body portion 1016. In some embodiments, the extension portions are entirely disposed above the longitudinal axis of the main body portion 1016.

In some embodiments, the gripping member 1018 may be manufactured by methods which form a three dimensional gripping portion. The gripping member 1018 can be configured to be secured within the recessed area 1026. In some other embodiments, the gripping member may be manufactured such that it is affixed to the reel seat during manufacturing. For example, the gripping member 1018 may be made from a material deposited directly into the recessed area 1026. In some embodiments, the gripping member 1018 comprises a material with different characteristics than a material forming the main body portion 1016 adjacent to the recessed area 1026. In some embodiments, the recessed area 1026 and a corresponding gripping member may be configured in a shape that creates a gripping surface on the trigger 1024 of the reel seat in addition to or alternative to the areas shown in Figs. 32-38. In some embodiments, the adjustable sleeve 1030 and/or the securing nut 1032 may also be configured with a recessed area for receiving a gripping member.

As discussed above, the recessed area 1026 and/or the gripping member 1018 can be of different shapes to correspond to a differently shaped main body portion 1026 of the reel seat 1012 or to cover different portions of the main body portion 1026. As illustrated in Figure 33, for example, the recessed area 1026 can cover a portion of the main body portion 1026. In some embodiments, the first recessed area 1026 extends over at least a portion of the first insert portion. In some embodiments, the recessed area 1026 covers at least 1/3 of a surface area of the main body portion. In some embodiments, the recessed area 1026 covers at least 1/10, 1/9, 1/8, 1/7, 1/6, 1/5, 1/4, and/or 1/2 of the surface area of the main body portion. In some embodiments, the recessed area 1026 covers the entire main body portion. In some embodiments a majority of the recessed portion is disposed above the longitudinal axis of the main body portion 1016.

### III. Spinning reel seat

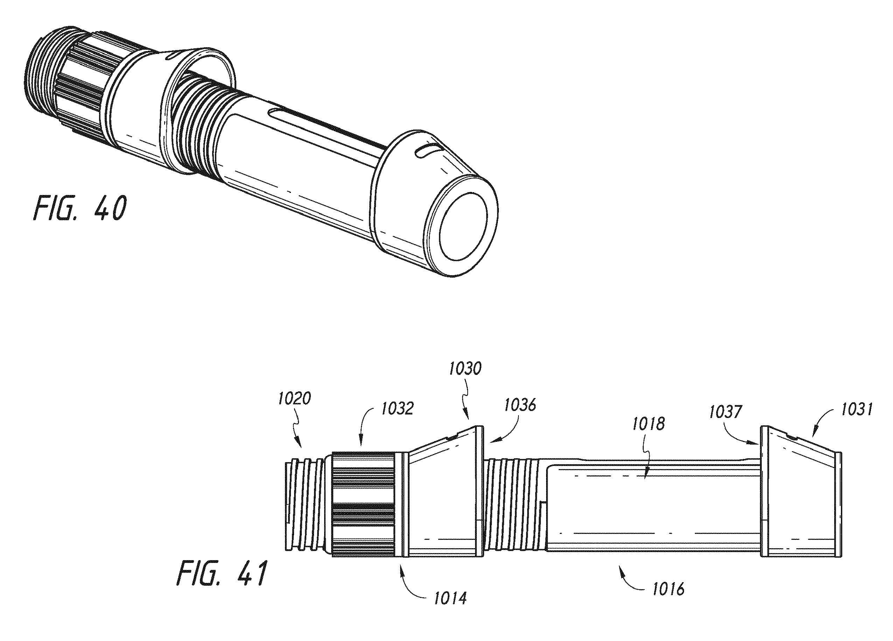

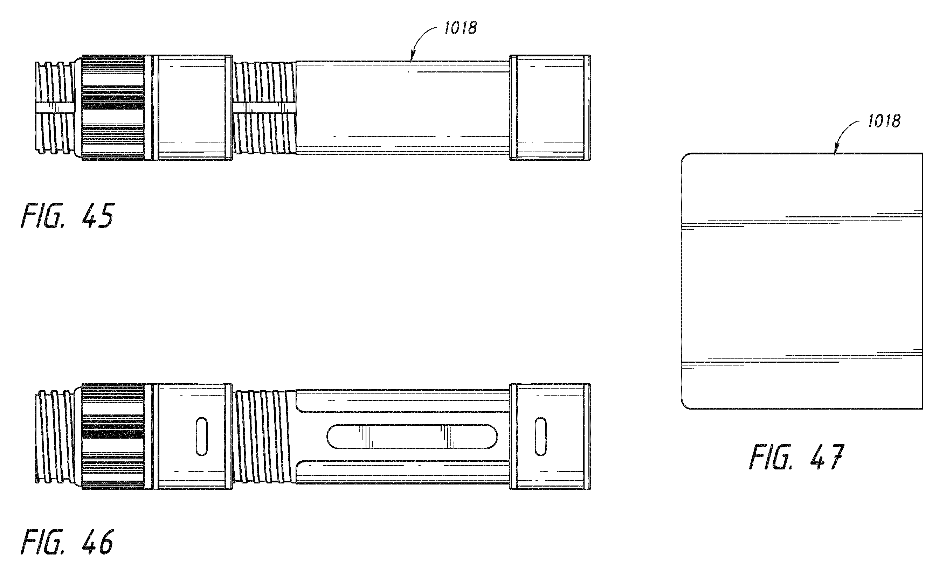

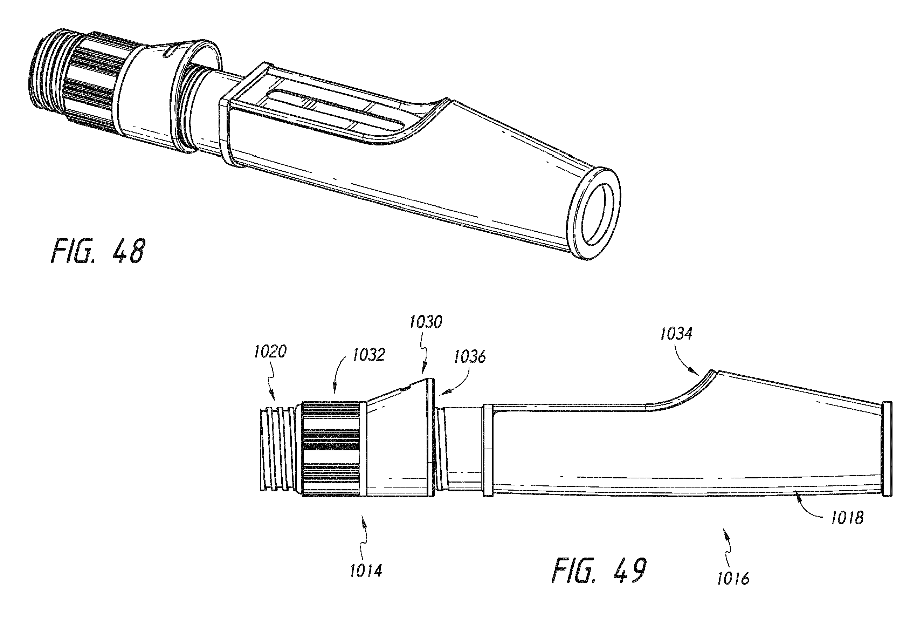

In some embodiments, a reel seat as disclosed herein may be configured to receive a spinning reel. The embodiments configured to receive a spinning reel, like other embodiments disclosed herein, may also accommodate fly rods in some embodiments. Figs. 40-47 depict a reel seat configured to receive a spinning reel as implemented in some embodiments and Figs. 48-58 depict a reel seat configured to receive a spinning reel as implemented in some other embodiments. Figs. 40-58 illustrate embodiments of the reel seat that are similar or identical to the reel seat depicted in Figs. 27-39 discussed above in many respects. For example, the reel seats depicted in Figs. 40-58 can include a main body portion 1016 and a securing portion 1014. In some embodiments, the main body portion includes the securing portion. The main body portion 1016 may comprise a threaded region 1020, a longitudinal cavity 1028, and a recessed grip receiving portion 1026 which is configured to receive a gripping member 1018. The gripping member 1018 can be configured to provide improved gripping performance while providing transmission of vibrations through the gripping member enabling an angler to accurately feel movement of the fishing pole. The reel seats illustrated in Figs. 40-58 can include any one, or any combination, of the features of the reel seat described above.

As discussed above, in some embodiments, a reel seat includes a main body portion 1016 and securing portion 1014. As shown in Figs. 40-56, the main body portion 1016 can define a first end and a second end. In some embodiments, the first end is fixed relative to the main body portion 1016. In some embodiments, the first end can be fixed directly to a handle portion of a fishing pole 1001. The second end of the main body portion 1016 can be adjustable. In some embodiments, the second end of the main body portion is fixed. In some embodiments, the second end can be configured to receive a foregrip or a plurality of different foregrips. The second end can include the threaded region 1020.

The securing portion 1014 can comprise a first insert portion and a second insert portion. The first insert portion can be configured to receive a first portion of the fishing reel arm. The second insert portion can be configured to receive a second portion of a fishing reel arm. The first insert portion can be disposed closer to the first end of the main body portion 1016 than the second insert portion. The first insert portion can be fixed relative to the main body portion. In some embodiments, the first insert portion can be configured to translate longitudinally along the main body portion 1016 of the reel seat 1012. The first insert portion can be positioned opposite the second insert portion. The second insert portion can be configured to translate longitudinally along the main body portion 1016 of the reel seat 1012.

In some embodiments, the securing portion 1014 may include an adjustable sleeve 1030 and a securing nut 1032. In some embodiments, the securing portion 1014, the adjustable sleeve 1030 and the securing nut 1032 may be the same or similar to those disclosed above in reference to embodiments of reel seats configured to receive baitcasting reels. As illustrated in Figs. 40-42, the adjustable sleeve 1030 can have a length of less than ½ of the main body portion. In some embodiments, the length of the adjustable sleeve 1030 is approximately ¼ the length of the main body portion 1016. The adjustable sleeve 1030 can include a first side and a second side. The first side of the adjustable sleeve 1030 can be tapered towards the second end of the main body portion 1016. In some embodiments the second side of the adjustable sleeve 1030 is substantially parallel to the longitudinal axis of the main body portion 1016. In some embodiments, the second side of the adjustable sleeve 1030 is substantially parallel to the second side of the main body portion 1016. As illustrated in Figs. 40-42, the securing portion may form a cavity 1036 configured to receive a second end of a foot of a fishing reel. In some embodiments, the securing portion 1014 may be larger or smaller for implementations configured to receive spinning reels compared to those configured to receive baitcasting reels described above. In some embodiments, the cavity 1036 formed between the adjustable sleeve 1030 and the main body portion 1016 may be in a different shape or size than used in embodiments configured to receive a baitcasting reel.

In some embodiments, as shown in the embodiments depicted in Figs.40-46, a reel seat may comprise a second sleeve 1031 configured to receive a frst end of the foot of a fishing reel. In some embodiments, the first insert portion of the securing portion may comprise a second sleeve 1031 configured to receive a first end of the foot of a fishing reel. In some embodiments, the first insert portion of the securing portion may form a cavity 1037 configured to receive a first end of a foot of a fishing reel. In some embodiments, the second sleeve 1031 may be the same or similar in shape and size as adjustable sleeve 1030. As illustrated in Figs. 40-42, the second sleeve 1031 can include a first side and a second side. The first side of the second sleeve 1031 can be tapered towards the first end of the main body portion 1016. In some embodiments the second side of the second sleeve 1031 is substantially parallel to the longitudinal axis of the main body portion 1016. In some embodiments, the second side of the second sleeve 1031 is substantially parallel to the second side of the main body portion 1016. In some embodiments, the second sleeve 1031 may be part of the main body portion 1016 or may be a separate piece permanently attached to the main body portion 1016. In some embodiments, the second sleeve 1031 is adjustable and may be adjusted independently to secure a fishing reel. The second sleeve 1031 may be aligned with the adjustable sleeve 1030 such that the foot of a fishing reel may be secured between the cavity 1036 formed by the adjustable sleeve 1030 and the cavity 1037 formed by the second sleeve 1031.

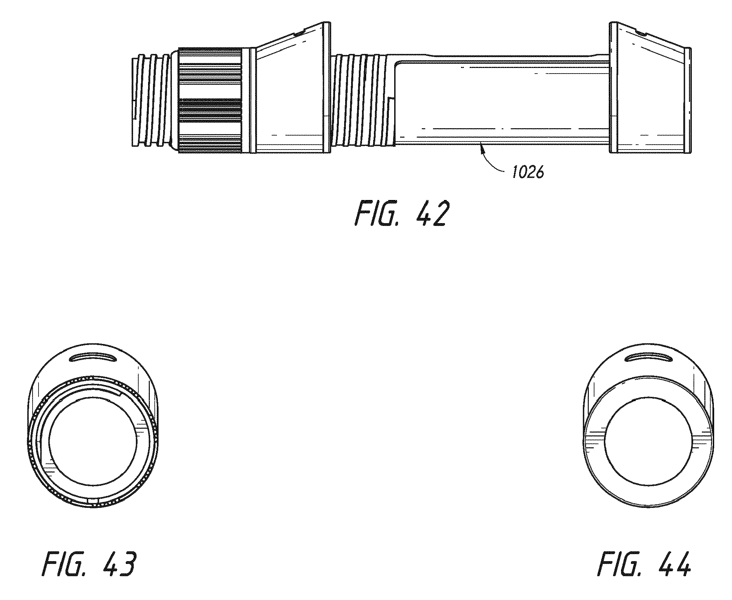

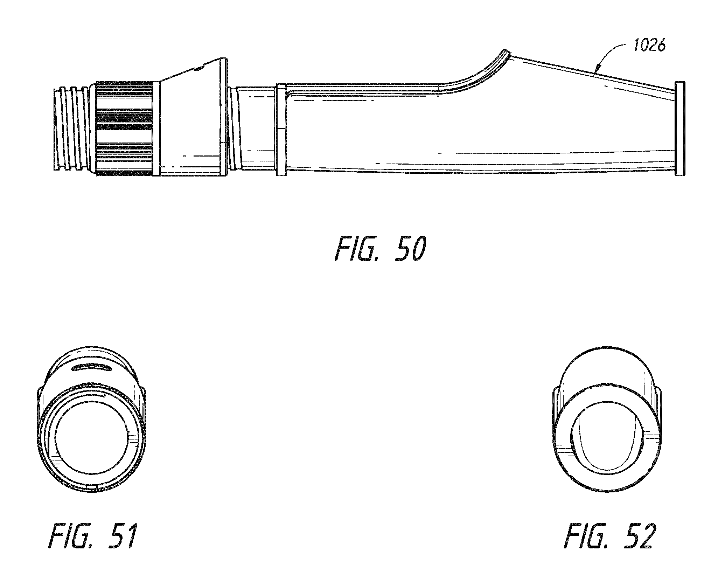

In some embodiments, the main body portion 1016 of the reel seat 1012 may comprise a recessed area 1026 configured to receive a supplemental gripping member 1018. As shown in Figs. 42 and 50 the recessed area 1026 may be positioned on the reel seat in a position an angler would naturally hold a fishing pole while angling. In some embodiments, the securing portion 1014 can be positioned on a first side of the main body portion 1016. In such embodiments, the recessed portion can extend from the first side of the main body portion 1016 to the se second side of the main body portion opposite the first side. For example, the recessed area 1026 may be configured to receive a gripping member 1018 such that the palm of the angler's hand comes in contact with the gripping member 1018 while performing casting and retrieving actions with a fishing pole. In some embodiments, the main body portion 1016 includes a thumb portion. In some embodiments, the second sleeve 1031 can include the thumb portion. The thumb portion can be disposed along a first side of the second sleeve 1031. The thumb portion can be substantially flat. In some embodiments, the thumb portion can be tapered towards the first end of the main body portion.

In some embodiments, as shown in Fig. 42, the recessed portion is configured to receive a gripping member 1018 that wraps partially around an exterior portion of the reel seat 1012. In some embodiments, the gripping member may not wrap entirely around the reel seat so that the foot of an attached fishing reel is secured against a solid portion of the reel seat 1012 configured to receive the foot of the fishing reel. In some embodiments, the recessed portion 1026 may be configured to receive a gripping member 1018 that wraps around the reel seat 1012. The gripping member 1018 may be secured to the main body portion 1016 such that the gripping member 1018 is secured within the recessed area 1026. This may provide the ability for the gripping member 1018 to wrap around the reel seat 1012 and connect one end to another at a seam to create a secure connection. In some embodiments, only a portion of the recessed area 1026 may wrap completely around the reel seat 1012.

As illustrated in Figures 40-45, the recessed area 1026 can extend various lengths along the main body portion 1016. For example, the recessed area 1026 can extend a substantial length along the main body portion 1016 from the first end towards the second end of the main body portion. In some embodiments, the recessed area 1026 extends a substantial length along the main body portion 1016 from the second sleeve 1031 towards the second end. In some embodiments the recessed area 1026 extends approximately ½ a length of the main body portion 1016. In some embodiments, the recessed area 1026 extends approximately ¾ the length of the main body portion 1016. In yet other embodiments, the recessed area 1026 extends approximately ¼ the length of the main body portion 1016.

In some embodiments, the recessed portion may be 0.1 mm-1 mm in depth. In some embodiments, the recessed portion may be 1 mm-2 mm in depth. In some embodiments, the depth of the recessed area 1026 may be the same or substantially similar through the whole recessed area, in some embodiments, different portion of the recessed area 1026 may have different depths. This may, for example, provide the best performance features for different portions of the reel seat. For example, a gripping member 1018 may have different thicknesses to match the depth of the recessed area 1026. The gripping member may then provide better gripping and comfort on some portions of the reel seat, while providing better vibration detection through other portions of the reel seat.

In some embodiments, as shown in the implementations depicted in Figs. 48-56, the foot receiving area of a reel seat 1012 may include a substantially flat portion. The foot receiving area of reel seat 1012 may include a cutout sleeve 1034 on one end facing the adjustable sleeve 1030 on the other end. Thus, as shown, in some embodiments the securing portion 1014 can have a fixed end and an adjustable end.

The flat portion may be similar in shape and size to the foot of a compatible fishing reel. The cutout sleeve 1034 may be shaped to receive one side of a fishing reel foot. In some embodiments the cutout sleeve 1034 may be tapered to securely fasten fishing reels with feet of a variety of sizes. In some embodiments, the cutout sleeve 1034 can include the first insertion portion of the securing portion. The cutout sleeve 1034 can be configured to receive a first end of the foot of a fishing reel.

In some embodiments, as shown in Figs. 48-56, a portion of the recessed area 1026 extends around the reel seat 1012, while other portions of the recessed area 1026 do not extend around the reel seat. In some embodiments, the recessed portion 1026 can include a thumb portion along a first side of the main body portion 1016. In some embodiments, the gripping member 1018 can include the thumb portion along a first side of the main body portion 1016. As shown in Figs. 48-58, the thumb portion can be disposed along a first side of the gripping member 1018 towards the first end of the main body portion 1016. The thumb portion can extend from the first end towards the second end of the main body portion 1016. The thumb portion can be tapered upwardly away from the first end towards the second end of the main body portion. In some embodiments, the thumb portion is substantially flat. As illustrated in Figs. 48-56, the thumb portion can extend various distances along the main body portion 1016. For example, the thumb portion can extend a length approximately equal to a length of the flat portion. In some embodiments, the thumb portion can extend a length approximately ½ the length of the recessed area 1026 and/or the gripping member 1018. In some embodiments, the thumb portion can extend a length of less than approximately ½ the length of the recessed area 1026 and/or the gripping member 1018. The recessed area 1026 and/or gripping member 1018 can extend substantially the length of the main body portion 1016. In some embodiments, the recessed area 1026 extends approximately 1/2 the length of the main body portion 1016. In some embodiments, the recessed area 1026 extends approximately ¾ the length of the main body portion 1016.

As illustrated in Figs. 48-56, a second side of the main body portion 18 can be substantially flat. In such embodiments, the second side of the main body portion 18 can be approximately parallel to the flat portion.

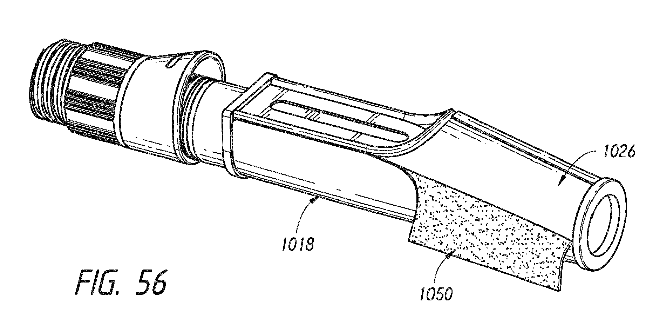

In some embodiments, the gripping member 1018 may be adhered, bonded, or otherwise attached to the surface of the recessed area 1026 of the reel seat 1012. In addition, the ends of the gripping member 1018 may be attached at a seam 1044. In some embodiments, the gripping member 1018 may be manufactured as a flat panel as shown in Fig. 56. The panel may be configured in a shape to fit the recessed area 1026. In some embodiments, the panel may be of a thickness substantially similar to the depth of the recessed area 1026. In some embodiments, the panel is of a substantially uniform thickness. In some other embodiments, the panel may have varying thicknesses such that different regions of a gripping surface of the gripping member 1018 provide different advantageous properties for an angler.

### IV. Gripping Member

In some embodiments, the gripping member attached to a reel seat, such as the baitcasing reel seats described above and depicted in Figs. 32-39, and the embodiments of spinning reel seats described above and depicted in Figs. 40-56 may be made of a variety of materials to provide the performance characteristics desired by an angler. For example, in some embodiments, the gripping member may provide a grip that is light in weight and reduces or eliminates the absorption of water. Some embodiments provide a feeling of tackiness while also minimizing the weight/density of the grip. Some embodiments of the grips described herein include a resilient base or underlisting, which may be ethylene-vinyl-acetate (EVA), and a gripping portion including an EVA inner or backing layer. In some embodiments, the gripping member can include multiple layers. For example, in some embodiments, the gripping portion can include a combination polyurethane and thin fabric layer that is joined to the EVA inner layer. The fabric layer can be impregnated with polyurethane. In some embodiments, the polyurethane further includes a woven fabric mesh layer disposed outside the impregnated fabric layer.

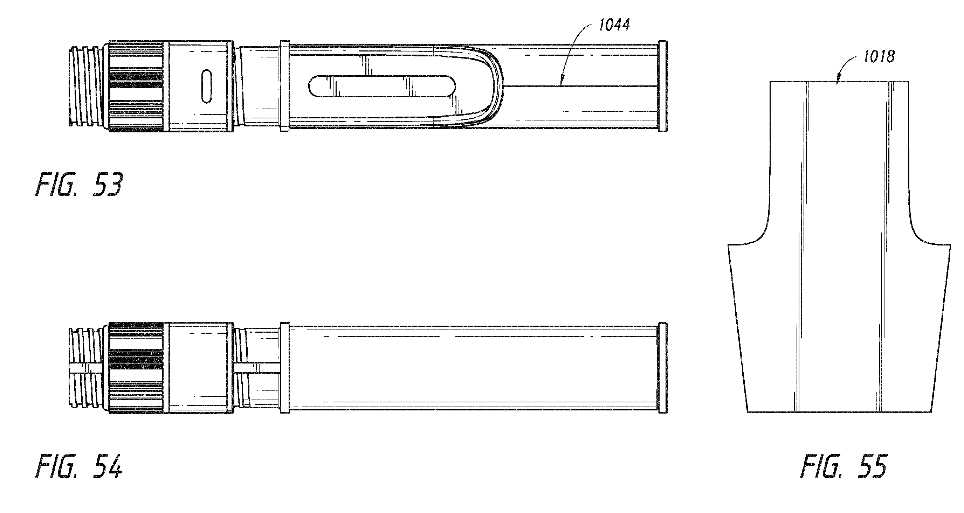

In some embodiments, the gripping member 1018 is shaped to generally correspond with the recessed area 1026 of a reel seat 1012 when applied thereto. In some embodiments, as shown in Fig. 56, a gripping member 1018 in the form of a panel (e.g., as shown in Fig. 55) may be folded or wrapped around the recessed area 1026 of a reel seat 1012. Folding or wrapping a flat panel around the reel seat may form a seam substantially parallel to the longitudinal axis of the reel seat. In some embodiments, the seam may enable various material layers of the gripping member 1018 to be joined to similar material layers. In some embodiments, some edges of the gripping member 1018 may be skived. For example, the edges of gripping member 1018 which will meet at a seam 1044 may be skived so as to overlap along the seam 1044 with like layers generally contacting like layers.

In some embodiments, such a seam 1044 is stitched closed with the stitches preferably extending through the gripping member 1018. In some embodiments, the gripping member 1018 may comprise various layers. In such embodiments, the stitching at a seam may extend through each of the layers of the gripping member 1018 or may extend only through some of the layers. For example the gripping member 1018 may comprise a polyurethane layer and an EVA layer. The polyurethane layer may or may not include a polyurethane/felt layer. In some embodiments, the stitching only extends through the polyurethane or polyurethane/felt layer and not extend through the EVA layer. In some embodiments, the gripping member may be stitched inside out with the outer surface facing inwards and, after stitching the seam 1044, the gripping member may be reversed as it is applied to the reel seat 1012 such that, on the finished reel seat 1012, the outer surface is facing outwards. For example, the outer surface of the gripping member 1018 may comprise a polyurethane material and the inner surface of the gripping member 1018 may comprise an EVA material. The layers may be adhered, bonded, or otherwise attached, for example, by applying adhesive to the inside of the outer layer, to the outside of the inner layer, or to bother layers.

In some embodiments, an adhesive is sprayed, painted, or otherwise applied onto the recessed area 1026 of the reel seat 1012, the inner surface 1050 of the gripping member 1018 or both the recessed area 1026 and the inner surface 1050 of the gripping member. As the gripping member 1018 is folder, wrapped or otherwise applied to the recessed area 1026 the adhesive may attach the gripping member to the reel seat in a secure manner.

In some embodiments, one or more layers of the gripping member 1018 comprise EVA to reduce the weight and lower the density of the finished reel seat and to provide a cushioning material that is less inclined to absorb and hold water or other fluids. This is particularly useful in fishing pole applications, for example when the pole is dropped into the water, as the lightweight/low density griping member 1018 according to embodiments of the present invention will preferably float even when wet. In some embodiments, an EVA layer may be between approximately 0.5 and 1.5 millimeters thick. In some embodiments, an EVA layer may be between approximately 0.75 and 1.25 millimeters thick. In a preferred embodiment, an EVA layer may be approximately 1 millimeter thick. In some embodiments, an EVA member may be between approximately 0.1 and 0.5 millimeters thick.

In some embodiments, an outer surface of the gripping member 1018 may comprise a polyurethane material. In some embodiments, the polyurethane material may be manufactured as a thin non-woven fabric layer that is saturated with polyurethane, by, for example, dipping the thin fabric layer into a polyurethane bath. The polyurethane is preferably coagulated to form one or more closed cells or pores. The non-woven fabric layer has an outer surface and an inner surface and may be fabricated of suitable materials such as nylon, cotton, polyester, or the like and may be felt. In some embodiments, the fabric layer may be compressed to reduce its thickness prior to the application of polyurethane thereto. In some embodiments, the compression also enhances the rigidity of the fabric layer. In some embodiments the compression also spreads the non-woven fibers to enhance the penetration of the polyurethane into the thin fabric layer. Increasing the amount of polyurethane penetration and saturation into the thin fabric layer reduces the amount of space available for water and other fluids to soak into and become trapped within the gripping member 1018. This is particularly useful in fishing pole applications. In some embodiments, the thin non-woven fabric layer is between approximately 0.1 and 0.5 millimeters. In some embodiments, the thin non-woven fabric layer is between approximately 0.3 and 0.4 millimeters thick. In some embodiments, the thin non-woven fabric layer is between approximately 0.3 and 0.35 millimeters thick. In some embodiments, the thin fabric layer is approximately 0.35 millimeters thick.

In some embodiments, not shown, additional liquid polyurethane can be added to the top surface of the uncoagulated polyurethane that coats the thin fabric sheet after the sheet is directed out of a polyurethane bath and before the polyurethane is coagulated. The second polyurethane can include one or more different characteristics from the first polyurethane to provide contrast on the gripping member 1018 and they may be coagulated together to form a contiguous polyurethane layer with different properties. For example, the second polyurethane can include a different color, durometer or level of tackiness. In some embodiments, a coating layer of polyurethane or other polymer may be included on the outer surface of the gripping member 1018 for enhanced water resistance.

In some embodiments, once formed, the gripping member may be cut into a suitable shape corresponding to a recessed area 1026 of a compatible reel seat 1012. Furthermore, a pattern may be imprinted on the surface of the gripping member to provide enhanced friction to provide additional gripping ability to the reel seat. In some embodiments, the edges of the gripping member 1018 may be skived in a parallel fashion such that, when the gripping member 1018 is folded or wrapped around the recessed area 1026 of the reel seat 1012, the skived edges overlap with like layers in contact with and glued to like layers along an angled seam 1044. In some embodiments, the side edges are skived in an anti-parallel fashion such that, when wrapped around the recessed area 1026 of the reel seat 1012, the seam can be stitched with the outer surfaces at or near the side edges contacting each other.

In some embodiments, the thickness of the gripping member 1018 corresponds generally to the depth of the recessed area 1026 to facilitate the creation of a smooth transition from the gripping member 1018 to other portions of the reel seat 1012. In some embodiments, the thickness of the gripping member 1018 may vary to provide various performance benefits to different portions of the reel seat. In such embodiments, the edges of the reel seat may correspond in thickness to the depth of the recessed area 1026 to facilitate the creation of a smooth transition from the surface of the gripping member 1018 to the reel seat 1012.

In some embodiments, the gripping member 1018 may be constructed from different materials than described above. For example, the gripping member 1018 may be polyurethane injection molded into a shape corresponding to a recessed area 1026 of a compatible reel seat 1012. In some embodiments, the gripping member 1018 may be formed on the recessed area 1026. For example, the gripping member 1018 may be formed by depositing a resilient material into the recessed area 1026 to form a grip on the reel seat. In some embodiments the gripping member 1018 may be made out of other materials, such as, layered polyurethane and EVA without a felt layer, a single polyurethane layer, natural materials including leather, fabrics, cork, wood, rubber, or other natural materials or products, other natural or synthetic polymer materials, or any other resilient material that provides desirable performance or aesthetic characteristics for anglers.

In some embodiments, the gripping member 1018 may be removed from a compatible reel seat 1012 and replaced with another gripping member 1018. This may enable an angler to fix problems occurring from a worn or damaged grip on the reel seat 1012. In some embodiments, this may also enable an angler to change the aesthetic appearance of a reel seat 1012 or to change performance characteristics of the gripping member 1018 to suit the angler's preferences or a particular activity's needs. For example, if an angler is outfitting a pole with a new reel for a different type of fishing, the angler may prefer to use a reel seat with different gripping characteristics than with a previously used reel.

### V. Fishing Pole Application

The reel seats disclosed herein are preferably attached to compatible fishing poles. For example, as shown in Fig. 27, a reel seat 1012 as disclosed herein may be attached to the handle portion of the fishing pole 1001. To attach the reel seat to the fishing pole 1001, the handle portion of the shaft 1002 of the fishing pole may be inserted into the longitudinal cavity 1028 of the reel seat 1012. In some embodiments the shaft 1002 may be tapered through the handle portion. In such embodiments, the reel seat 1012 may be slid onto the shaft 1002 of the fishing pole 1001 from the smaller diameter tip end of the fishing pole 1001. In some embodiments, this may require that the shaft 1002 of the fishing pole 1001 does not have eyelets 1003 attached at the time. In some embodiments, the longitudinal cavity 1028 of the reel seat 1012 may have a diameter larger than the butt end of the shaft 1002. Once the reel seat 1012 is positioned in an appropriate location along the handle of the fishing pole it may be secured in place with an adhesive or epoxy.

In some embodiments, the reel seat 1012 can be manufactured to be used with a fishing pole 1001. For example, the main body portion 1016, as described herein, can be provided. In some embodiments, the gripping member can be provided. As described herein, the gripping member 1018 can comprise a material with different characteristics than a material forming the main body portion 1016 adjacent the recessed area 1026. In some embodiments, the outer periphery of the gripping member corresponds to the shape of the recessed area 1026. In some embodiments, the gripping member is secured onto the main body portion 1016 such that the gripping member 1018 is secured within the recessed area. To secure the gripping member 1018 to the main body portion, the gripping member 1018 can be adhered to the main body portion. In some embodiments, securing the gripping member 1018 within the recessed area fills the recessed area such that a transition between the gripping member 1018 and the main body portion 1016 adjacent the recessed area 1026 is smooth.

In some embodiments, as shown in Figs. 27-31, a reel seat as disclosed herein may be positioned between one or more grips, such as a fore grip 1006, a rear grip 1008, and a butt cap 1010. In some embodiments, a fishing pole may include fewer or additional grips than shown in the figures. For example, a fishing pole with a reel seat as disclosed herein may have a fore grip and rear grip, but no separate butt cap. In some embodiments, the fishing pole may not have a fore grip or may not have a rear grip. For example, a fly rod with a reel seat as disclosed herein may have a fore grip, but the reel seat may be at the end of the pole, thus, there may not be a rear grip.

In some embodiments, the gripping member 1018 of the reel seat 1012 is configured to match the gripping surfaces 1019 of other grips on a fishing pole. For example, as shown in Figs. 27, 28, and 29, the gripping surfaces 1019 of the grips are of a common design. In some embodiments, the gripping surfaces 1019 may also be constructed of the same material. In some embodiments, the gripping member 1018 of the reel seat may have a different design or material than the other grips on the handle of the fishing pole. For example, as shown in Fig. 30, the gripping member 1018 of the reel seat is different from the gripping surfaces 1019 of the other grip portions. In some embodiments, the gripping member 1018 of the reel seat may have a different design than the gripping surfaces 1019 of the other grip portions, but may be constructed of the same or similar material. In some embodiments, the reel seat 1012 may have a gripping member 1018 that matches one or more of the other gripping surfaces 1019, but doesn't match the other gripping surfaces. For example, as shown in Fig. 31, the gripping member 1018 of the reel seat matches the gripping surface 1019 of the butt cap, but doesn't match the gripping surfaces 1019 of the fore grip 1006 and rear grip 1008.

In some embodiments, the gripping surfaces 1019 may comprise different material than the gripping member 1018 to provide different performance benefits. For example, the gripping member 1018 may be constructed with a focus on transmission of vibrations from the shaft 1002 of the fishing pole to the hand of an angler so that the angler can feel small movements while actively attempting to attract a fish, feel a fish bite, or reel in a fish. On the other hand, the rear grip of the fishing pole may be primarily used for casting and transmission of vibrations to the angler may not be a priority, but instead tackiness and comfort may be the performance goals. In some embodiments, to provide the performance characteristics desirable for different grips, different materials may be used. In some embodiments, to provide the performance characteristics desirable for different grips, the same or similar materials may be used, however, the thickness of the material or one or more layers of the material may be different to provide different characteristics. Accordingly, kits may be provided including different combinations of grips with corresponding use and/or appears based characteristics along with instructions for how to incorporate the grips onto a fishing pole.

The various features and processes described above may be used independently of one another, or may be combined in various ways. All possible combinations and sub-combinations are intended to fall within the scope of this disclosure. In addition, certain methods or processes may be omitted in some implementations. The methods and processes described herein are also not limited to any particular sequence. For example, described the methods may be performed in an order other than that specifically disclosed, or multiple steps may be combined in a single step or may be performed in parallel with some other steps. The example systems and components described herein may be configured differently than described. For example, elements may be added to, removed from, or rearranged compared to the disclosed example embodiments.

Certain terminology may be used in the description for the purpose of reference only, and thus is not intended to be limiting. For example, terms such as "above" and "below" refer to directions in the drawings to which reference is made. Terms such as "front," "back," "left," "right," "rear," and "side" describe the orientation and/or location of portions of the components or elements within a consistent but arbitrary frame of reference which is made clear by reference to the text and the associated drawings describing the components or elements under discussion. Moreover, terms such as "first," "second," "third," and so on may be used to describe separate components. Such terminology may include the words specifically mentioned above, derivatives thereof, and words of similar import.

Conditional language, for example, among others, "can," "could," "might," or "may," unless specifically stated otherwise, or otherwise understood within the context as used, is generally intended to convey that certain embodiments include, while other embodiments do not include, certain features, elements and/or steps. Thus, such conditional language is not generally intended to imply that features, elements and/or steps are in any way required for one or more embodiments or that one or more embodiments necessarily include logic for deciding, with or without user input or prompting, whether these features, elements and/or steps are included or are to be performed in any particular embodiment.

It should be emphasized that many variations and modifications may be made to the above-described embodiments, the elements of which are to be understood as being among other acceptable examples. All such modifications and variations are intended to be included herein within the scope of this disclosure. The foregoing description details certain embodiments. It will be appreciated, however, that no matter how detailed the foregoing appears in text or in the figures, the systems and methods can be practiced in many ways. As is also stated above, it should be noted that the use of particular terminology when describing certain features or aspects of the invention should not be taken to imply that the terminology is being re-defined herein to be restricted to including any specific characteristics of the features or aspects of the systems and methods with which that terminology is associated.

While the invention has been discussed in the context of certain embodiments and examples, it should be appreciated that the present invention extends beyond the specifically disclosed embodiments to other alternative embodiments and/or uses of the inventions and obvious modifications and equivalents thereof. Some embodiments have been described in connection with the accompanying drawings. However, it should be understood that the figures are not drawn to scale. Distances, angles, etc. are merely illustrative and do not necessarily bear an exact relationship to actual dimensions and layout of the devices illustrated. Components can be added, removed, and/or rearranged. Additionally, the skilled artisan will recognize that any of the above-described methods can be carried out using any appropriate apparatus. Further, the disclosure herein of any particular feature, aspect, method, property, characteristic, quality, attribute, element, or the like in connection with various embodiments can be used in all other embodiments set forth herein. Additionally, processing steps may be added, removed, or reordered. A wide variety of designs and approaches are possible.

For purposes of this disclosure, certain aspects, advantages, and novel features of the embodiments are described herein. It is to be understood that not necessarily all such advantages may be achieved in accordance with any particular embodiment of the invention. Thus, for example, those skilled in the art will recognize that the invention may be embodied or carried out in a manner that achieves one advantage or group of advantages as taught herein without necessarily achieving other advantages as may be taught or suggested herein.

Thus in summary, according to a first aspect of the present invention there is provided a multi-component fishing rod comprising: a first rod section comprising: a first threaded region disposed longitudinally along a portion of the first rod section; and a first grip positioned radially around the first rod section; a second rod section comprising: a second threaded region disposed longitudinally along a portion of the second rod section; and a second grip positioned radially around the second rod section; a first alignment brake having a first threaded surface configured to mate with the first threaded region of the first rod section; a second alignment brake having a second threaded surface configured to mate with the second threaded region of the second rod section; and a reel seat having a third threaded region, wherein the third threaded region is configured to mate with the first threaded region of the first rod section and the second threaded region of the second rod section.

Advantageously the multi-component fishing rod further comprises a connector having a first side configured to be inserted partially into the first rod section and a second side configured to be inserted partially into the second rod section. Preferably the connector further comprises a stop having a diameter larger than the first inner diameter of the first rod section and larger than the second inner diameter of the second rod section.

Advantageously the first grip, the second grip, and the reel seat are aligned when the first rod section is screwed into engagement with the first alignment brake and the second rod section is screwed into engagement with the second alignment brake.

According to a second aspect of the present invention there is provided a method of assembling a multi-component fishing rod comprising: attaching a first externally threaded bar to a first end of a first section of a fishing rod; attaching a second externally threaded bar to a second end of a second section of the fishing rod; screwing a first alignment brake having internal threading onto the first externally threaded bar; screwing a second alignment brake having internal threading onto the second externally threaded bar; attaching an internally threaded insert into a hollow cavity of a reel seat; inserting a connector into the first end of the first section of a fishing rod; screwing the first externally threaded bar into the internally threaded insert; and screwing the second externally threaded bar into the internally threaded insert such that at least a portion of the connector is inserted into the second section of the fishing rod, wherein the first section of the fishing rod, the second section of the fishing rod, and the reel seat are substantially in alignment.

According to a further aspect of the present invention there is provided a method of assembling a multi-component fishing rod comprising: screwing a first alignment brake having internal threading onto a first externally threaded bar attached to a first rod section; screwing a second alignment brake having internal threading onto a second externally threaded bar attached to a second rod section; screwing the first externally threaded bar into a reel seat having an internally threaded insert; aligning the reel seat and the first section of the fishing rod; screwing the second externally threaded bar into the internally threaded insert of the reel seat such that at least a portion of the connector is inserted into the second section of the fishing rod; and aligning the reel seat and the second section of the fishing rod.

Advantageously the method further comprises inserting a connector into the first end of the first section of a fishing rod.

Advantageously the step of aligning the reel seat and the first section of the fishing rod comprises: tightening the reel seat onto the first externally threaded bar until fastened against the first alignment brake; determining that the reel seat is under rotated from alignment with the first section of the fishing rod; loosening the reel seat to allow movement of the alignment brake; tightening the alignment brake on the externally threaded bar; tightening the reel seat onto the first externally threaded bar until fastened against the alignment brake such that it is no longer under rotated.

Advantageously the step of aligning the reel seat and the first section of the fishing rod comprises: tightening the reel seat onto the first externally threaded bar until fastened against the first alignment brake; determining that the reel seat is over rotated from alignment with the first section of the fishing rod; loosening the reel seat to allow movement of the alignment brake; loosening the alignment brake on the externally threaded bar; tightening the reel seat onto the first externally threaded bar until fastened against the alignment brake such that it is no longer over rotated.

According to a further aspect of the present invention there is provided a multi-component fishing rod comprising: a main rod component comprising a first threaded region disposed longitudinally along the main rod component; a handle component comprising a second threaded region disposed longitudinally along the handle component; and a reel seat having a third threaded region, wherein the third threaded region is configured to mate with the first threaded region of the main rod component and the second threaded region of the handle component, the reel seat comprising: a main body portion defining a first end and a second end comprising: a longitudinal hollow cavity extending from the first end of the main body portion to the second end of the main body portion configured to receive a handle portion of a fishing pole; a first insert portion configured to receive a first portion of a fishing reel arm; a second insert portion configured to receive a second portion of a fishing reel arm; and a recessed area extending around at least some of an exterior portion of the main body portion of the reel seat; and a gripping member comprising a resilient material, wherein the gripping member is shaped to correspond to the recessed area of the main body portion, such that the gripping member will substantially fill the recessed area when applied to the main body portion, wherein the gripping member is adhered to the main body portion such that the gripping member substantially fills the recessed area.

According to a further aspect of the present invention there is provided a main rod component of a fishing pole comprising: a main shaft having defining a first end with a first outer diameter; a main rod threaded region disposed longitudinally along the main shaft; and a fore grip positioned radially around the main shaft;
According to a further aspect of the present invention there is provided a handle component of a fishing pole comprising: a handle shaft defining a second end with a second outer diameter; a second threaded region disposed longitudinally along the handle shaft; and a rear grip positioned radially around the handle shaft.

According to a further aspect of the present invention there is provided a reel seat component of a fishing pole comprising: a main body portion defining a first end and a second end; a longitudinal hollow cavity extending from the first end of the main body portion to the second end of the main body portion; and a threaded region on an internal surface of the longitudinal hollow cavity.

According to a further aspect of the present invention there is provided an alignment brake for use aligning components of a fishing pole, comprising: a solid material defining an inner diameter and an outer diameter; a cavity positioned between the inner diameter and the outer diameter; and a threaded surface configured to mate with an outer surface of a shaft component.

According to a further aspect of the present invention there is provided a multi-component fishing pole kit comprising the above described main rod component and the above described handle component.

According to a further aspect of the present invention there is provided a multi-component fishing pole kit comprising the above described main rod component and the above described reel seat component.

According to a further aspect of the present invention there is provided a multi-component fishing pole kit comprising the above described main rod component, the above described reel seat component and the above described handle component.

According to a further aspect of the present invention there is provided a multi-component fishing pole kit comprising the above described handle component and the above described reel seat component.

According to a further aspect of the present invention there is provided a multi-component fishing pole kit comprising the above described main rod component, the above described handle component and the above described alignment brake.

According to a further aspect of the present invention there is provided a multi-component fishing pole kit comprising the above described main rod component, the above described reel seat component and the above described alignment brake.

According to a further aspect of the present invention there is provided a multi-component fishing pole kit comprising the above described main rod component, the above described reel seat component, the above described handle component and the above described alignment brake.

According to a further aspect of the present invention there is provided a multi-component fishing pole kit comprising the above described reel seat component, the above described handle component and the above described alignment brake.

According to a further aspect of the present invention there is provided a multi-component fishing pole kit comprising the above described main rod component, the above described handle component and a guide providing instructions how to align components of the multi-component fishing pole.

According to a further aspect of the present invention there is provided a multi-component fishing pole kit comprising the above described main rod component, the above described reel seat component, and a guide providing instructions how to align components of the multi-component fishing pole.

According to a further aspect of the present invention there is provided a multi-component fishing pole kit comprising the above described main rod component, the above described reel seat component, the above described handle component and a guide providing instructions how to align components of the multi-component fishing pole.

According to a further aspect of the present invention there is provided a multi-component fishing pole kit comprising the above described main rod component, the above described handle component, the above described alignment brake and a guide providing instructions how to align components of the multi-component fishing pole.

According to a further aspect of the present invention there is provided a multi-component fishing pole kit comprising the above described main rod component, the above described reel seat component, the above described alignment brake and a guide providing instructions how to align components of the multi-component fishing pole.

According to a further aspect of the present invention there is provided a multi-component fishing pole kit comprising the above described main rod component, the above described reel seat component, the above described handle component, the above described alignment brake and a guide providing instructions how to align components of the multi-component fishing pole.

According to a further aspect of the present invention there is provided a multi-component fishing pole kit comprising the above described reel seat component, the above described handle component, the above described alignment brake and a guide providing instructions how to align components of the multi-component fishing pole.

According to a further aspect of the present invention there is provided a multi-component fishing pole kit comprising the above described main rod component and the above described alignment brake.

According to a further aspect of the present invention there is provided a multi-component fishing pole kit comprising the above described handle component and the above described alignment brake.

According to a further aspect of the present invention there is provided a multi-component fishing pole kit comprising the above described reel seat component and the above described alignment brake.

According to a further aspect of the present invention there is provided a multi-component fishing pole kit comprising the above described main rod component the above described alignment brake and a guide providing instructions how to align components of the multi-component fishing pole.

According to a further aspect of the present invention there is provided a multi-component fishing pole kit comprising the above described handle component the above described alignment brake and a guide providing instructions how to align components of the multi-component fishing pole.

According to a further aspect of the present invention there is provided a multi-component fishing pole kit comprising the above described reel seat component the above described alignment brake and a guide providing instructions how to align components of the multi-component fishing pole.

According to a further aspect of the present invention there is provided a multi-component fishing pole kit comprising the above described main rod component and a guide providing instructions how to align components of the multi-component fishing pole.

According to a further aspect of the present invention there is provided a multi-component fishing pole kit comprising the above described handle component and a guide providing instructions how to align components of the multi-component fishing pole.

According to a further aspect of the present invention there is provided a multi-component fishing pole kit comprising the above described reel seat component and a guide providing instructions how to align components of the multi-component fishing pole.

According to a further aspect of the present invention there is provided a multi-component fishing rod comprising: a first rod section comprising: a first engagement region; and a first grip; a second rod section comprising: a second engagement region; and a second grip; a first alignment brake having a first engagement portion configured to mate with the first engagement region of the first rod section; a second alignment brake having a second engagement portion configured to mate with the second engagement region of the second rod section; and a reel seat having a third engagement region, wherein the third engagement region is configured to mate with the first engagement region of the first rod section and the second engagement region of the second rod section.

According to a further aspect of the present invention there is provided a method of assembling a multi-component fishing rod comprising: providing a first section of the fishing rod including a first engagement region; providing a second section of the fishing rod including a second engagement region and a second alignment brake; providing a reel seat including an engagement region configured to engage the first and second engagement regions of the first and second sections of the fishing rod; coupling the first engagement region to the reel seat; and coupling the second engagement region to the reel seat such that at least a portion of the connector is inserted into the second section of the fishing rod, wherein the first section of the fishing rod, the second section of the fishing rod, and the reel seat are substantially in alignment.

Advantageously the method, further comprises providing a stabilizing member configured to be engaged with the first and second sections of the fishing pole. Preferably the method further comprises inserting the connector into the first end of the first section of the fishing rod.

Advantageously the method further comprises providing a first alignment brake configured to be attached to the first section of the fishing pole. Preferably the method further comprises the step of adjusting the first alignment brake to control the position of the first section of the fishing pole relative to the position of the reel seat.

## Claims

1. A multi-component fishing rod or fishing pole kit comprising a brake assembly comprising a first alignment brake wherein the first alignment brake allows for an alignment in a desired position of one or more components selected from the list comprising:
a main rod component of a fishing pole comprising a first engagement region;
a handle component of the fishing pole comprising a second engagement region; and
a reel seat of the fishing pole having a third engagement region, wherein the third engagement region is configured to mate with the first engagement region of the main rod component and the second engagement region of the handle component, the reel seat comprising:
a main body portion defining a first end and a second end comprising: a longitudinal hollow cavity extending from the first end of the main body portion to the second end of the main body portion configured to receive a handle portion of a fishing pole.

2. The multi-component fishing rod or fishing pole kit of Claim 1, wherein the main body portion of the reel seat further comprises:
a first insert portion configured to receive a first portion of a fishing reel arm;
a second insert portion configured to receive a second portion of a fishing reel arm; and
a recessed area extending around at least some of an exterior portion of the main body portion of the reel seat.

3. The multi-component fishing rod or fishing pole kit of Claim 2, wherein the reel seat further comprises:
a gripping member comprising a resilient material, wherein the gripping member is shaped to correspond to the recessed area of the main body portion, such that the gripping member will substantially fill the recessed area when applied to the main body portion,
wherein the gripping member is adhered to the main body portion such that the gripping member fills the recessed area.

4. The multi-component fishing rod or fishing pole kit of Claim 3, wherein the resilient material of the gripping member comprises different characteristics than a material forming the main body portion of the reel seat adjacent the recessed area.

5. The multi-component fishing rod or fishing pole kit of any one of Claims 1 to 4, wherein the main rod component further comprises:
a main shaft having a first end with a first outer diameter; and
a fore grip positioned radially around the main shaft,
wherein the first engagement region of the main rod is disposed longitudinally along the main rod component.

6. The multi-component fishing rod or fishing pole kit of any one of Claims 1 to 5, wherein the handle component further comprises:
a handle shaft having a second end with a second outer diameter; and
a rear grip positioned radially around the handle shaft,
wherein the second engagement region of the handle component is disposed longitudinally along the handle component.

7. The multi-component fishing rod or fishing pole kit of any one of Claims 1 to 6, wherein the alignment brake further comprises:
a solid material defining an inner diameter and an outer diameter;
a cavity positioned between the inner diameter and the outer diameter; and
an engagement region configured to mate with the engagement region of a component.

8. The multi-component fishing rod or fishing pole kit of any one of Claims 1 to 7, wherein the fishing rod or fishing pole kit further comprises a guide providing instructions how to align components of the multi-component fishing pole.

9. The multi-component fishing rod or fishing pole kit of any one of Claims 1 to 8, further comprising a second alignment brake, wherein the second alignment brake allows for alignment in a desired position of a second rod component.

10. The multi-component fishing rod or fishing pole kit of Claim 9, wherein the engagement region of the second alignment brake has a threaded surface, wherein the engagement region of the second component has a threaded surface, and wherein the engagement region of the second alignment brake is configured to mate with the engagement region of the second component.

11. A method of assembling a multi-component fishing rod comprising:
providing a first alignment brake and one or more of the following components:
a main rod component of a fishing pole comprising a first engagement region;
a handle component of the fishing pole comprising a second engagement region; and
a reel seat of the fishing pole having a third engagement region, wherein the third engagement region is configured to mate with the first engagement region of the main rod component and the second engagement region of the handle component, the reel seat comprising:
a main body portion defining a first end and a second end comprising: a longitudinal hollow cavity extending from the first end of the main body portion to the second end of the main body portion configured to receive a handle portion of a fishing pole; and
providing instructions for using the first alignment brake for aligning one or more of the components to a desired alignment position.

12. The method of Claim 11, wherein the first alignment brake includes an inner threaded surface configured to engage the first engagement region, the second engagement region, and the third engagement region of the components.

13. The method of any one of Claims 11 to 12, further comprising adjusting the first alignment brake to control the position of the main rod component of the fishing rod relative to the position of the reel seat.

14. The method of any one of Claims 11 to 13, further comprising a second alignment brake wherein the second alignment brake allows for an alignment in a desired position of a second component of the one or more components.

15. The method of any one of Claims 11 to 14, further comprising providing a stabilizing member configured to be engaged with first and second components of the one or more components of the fishing rod.

16. The method of any one of Claims 11 to 15, further comprising aligning the main rod component relative to the desired alignment position.

17. The method of any one of Claims 11 to 16, further comprising aligning the handle component relative to the desired alignment position.

18. The method of any one of Claims 11 to 17, further comprising aligning the reel seat relative to the desired alignment position.

19. The method of any one of Claims 13 to 18, wherein adjusting the first alignment brake further comprises:
determining that the reel seat is under-adjusted relative to the desired alignment position of the first component of the one or more components;
loosening the reel seat to allow movement of the first alignment brake;
tightening the first alignment brake on the first engagement region of the first component; and
tightening the reel seat onto the first engagement region of the first component until fastened against the first alignment brake such that it is no longer under-adjusted.

20. The method of any one of Claims 13 to 19, wherein adjusting the first alignment brake further comprises:
tightening the reel seat onto the first engagement region of the first component of the one or more components until fastened against the first alignment brake;
determining that the reel seat is over-adjusted from alignment with the first component;
loosening the reel seat to allow movement of the first alignment brake;
loosening the first alignment brake on the first engagement region of the first component;
tightening the reel seat onto the first engagement region of the first component until fastened against the alignment brake such that it is no longer over-adjusted.
